# DEMANDE DE BREVET EUROPEEN

(11) **EP 4 378 820 A1**
(43) Date de publication de la demande: **05.06.2024**
(21) Numéro de dépôt: 23213112.8
(22) Date de dépôt: 29.11.2023
(51) Int. Cl.: B64C 1/14, E05B 83/00, E05B 81/24, E05B 81/56, E05B 81/66, E05F 15/635, E05F 15/652, E05F 15/655, E05F 15/659, E05B 81/18, E05B 81/64

(54) **SYSTÈME DE FERMETURE ET D'OUVERTURE À DISTANCE D'UNE PORTE D'AÉRONEF**

(30) Priorité: 29.11.2022 FR 2212467
(71) Demandeur: Airbus Canada Limited Partnership, Mirabel, QC J7N 3C6 (CA)
(72) Inventeur: MARIAT, Sylvain, 31700 Blagnac (FR); KLOETERGENS, Rainer, 31700 Blagnac (FR); SCHMITT, Laurent, 31700 Blagnac (FR); VIDAL, Olivier, décédé(e) (FR)
(74) Mandataire: den Braber, Gérard Paul

(57) **Abrégé**

- Le système (1) comprend un module de fermeture (16) fixé de façon amovible à une extrémité (8) du bras d'articulation (7) de la porte auquel est articulée un vantail (5), un module de fermeture (17) fixé de façon amovible à une structure solidaire (61) du dormant (6) de la porte et un dispositif de verrouillage (18) fixé de façon amovible au bras d'articulation (7). Le module de fermeture (17) est apte, alternativement, à tirer vers lui le module de fermeture (16) pour amener le vantail (5) vers la position fermée et à éloigner de lui le module de fermeture (16) pour amener le vantail (5) vers la position ouverte. Le dispositif de verrouillage (18) permet d'amener le levier de verrouillage (13) alternativement dans la position déverrouillée pour un déverrouillage du vantail (5) et dans la position verrouillée pour un verrouillage du vantail (5). Le système (1) permet de fermer la porte (2) de l'aéronef (AC) à distance.

## Description

### Domaine technique

La présente invention concerne un système de fermeture et d'ouverture à distance d'une porte prévue pour une ouverture d'accès d'un fuselage d'un aéronef ainsi qu'un procédé de mise en oeuvre dudit système.

### État de la technique

Les aéronefs présentent au moins une ouverture d'accès permettant d'embarquer dans l'aéronef ou de débarquer de l'aéronef. Afin d'accéder à l'ouverture d'accès pour embarquer ou débarquer, on peut utiliser des escaliers d'accès (« airstair » en anglais) incorporés ou non à l'aéronef. Par exemple, près un atterrissage de l'aéronef, l'équipage ouvre manuellement le vantail d'une porte d'accès à l'ouverture d'accès. L'escalier d'accès est déployé ou bien positionné devant l'ouverture d'accès. Les passagers et les membres d'équipage peuvent alors débarquer de l'aéronef. Or, il n'est plus possible de fermer le vantail de la porte après que tous les membres d'équipage ont débarqué. En effet, le mécanisme de fermeture qui permet de fermer manuellement le vantail n'est pas accessible aux personnes qui ne sont pas à bord de l'aéronef.

### Exposé de l'invention

La présente invention a pour objet de remédier à cet inconvénient afin qu'une personne ne se trouvant à bord d'un aéronef puisse fermer vantail.

Pour cela, un aspect de l'invention tel que défini dans la revendication 1 prévoit en un système de fermeture et d'ouverture à distance d'une porte prévue pour une ouverture d'accès d'un fuselage d'un aéronef, la porte comportant un vantail, un dormant délimitant l'ouverture d'accès et un bras d'articulation, le dormant étant fixé solidairement au fuselage, le vantail étant configuré pour se trouver alternativement dans une position fermée quand le vantail obture l'ouverture d'accès et une position ouverte quand le vantail laisse l'ouverture d'accès ouverte, le bras d'articulation comportant une première extrémité articulée au vantail et une deuxième extrémité articulée au dormant de façon que le vantail reste parallèle à lui-même lorsqu'il passe de la position ouverte à la position fermée et vice-versa, la porte comportant en outre un mécanisme de verrouillage configuré pour alternativement verrouiller et déverrouiller le vantail quand le vantail est dans la position fermée, le mécanisme de verrouillage comprenant un levier de verrouillage dont une extrémité est montée rotatif sur le vantail autour d'un axe de rotation perpendiculaire au vantail, le levier de verrouillage étant configuré pour se trouver alternativement dans une position de verrouillage dans laquelle le mécanisme de verrouillage verrouille le vantail et une position de déverrouillage dans laquelle le mécanisme de verrouillage ne verrouille pas le vantail,
le système comprenant :
- un dispositif de fermeture et d'ouverture comportant un premier module de fermeture et d'ouverture destiné à être fixé de façon amovible à la première extrémité du bras d'articulation et un deuxième module de fermeture et d'ouverture destiné à être fixé de façon amovible à une structure solidaire du dormant, le deuxième module de fermeture et d'ouverture étant apte, alternativement, à tirer vers lui le premier module de fermeture et d'ouverture de façon à amener le vantail vers la position fermée et à éloigner de lui le premier module de fermeture et d'ouverture de façon à amener le vantail vers la position ouverte,
- un dispositif de verrouillage et déverrouillage destiné à être fixé de façon amovible au bras d'articulation, le dispositif de verrouillage et déverrouillage étant configuré pour amener le levier de verrouillage alternativement dans la position déverrouillée pour un déverrouillage du vantail et dans la position verrouillée pour un verrouillage du vantail,
- un dispositif de commande configuré pour transmettre des ordres de commande de fermeture ou d'ouverture du vantail au dispositif de fermeture et d'ouverture et des ordres de commande de verrouillage ou de déverrouillage du vantail au dispositif de verrouillage et déverrouillage, en fonction d'ordres de commande transmis à distance au dispositif de commande par un utilisateur.

Ainsi, il est possible de fermer ou d'ouvrir la porte d'un aéronef par l'intermédiaire du dispositif de commande sans qu'il soit nécessaire d'être à abord de l'aéronef.

Un autre aspect de l'invention tel que défini dans la revendication 12 prévoit en un procédé de fermeture à distance du vantail à l'aide de la mise en oeuvre du système d'ouverture et de fermeture à distance tel que spécifié ci-dessus,
le procédé de fermeture comprenant les étapes suivantes :
- une étape de fermeture, mise en oeuvre par le dispositif de fermeture et d'ouverture, consistant à ce que le deuxième module de fermeture et d'ouverture tire vers lui le premier module de fermeture et d'ouverture de façon à amener le vantail vers la position fermée en réponse à une réception d'ordre de commande de fermeture du dispositif de commande suite à une réception par le dispositif de commande d'ordres de commande transmis à distance par un utilisateur ;
- une étape de verrouillage dans laquelle le dispositif de verrouillage et déverrouillage amène le levier de verrouillage dans la position de verrouillage pour un verrouillage du vantail en réponse à une réception d'ordre de commande de verrouillage du dispositif de commande.

Encore un autre aspect de l'invention tel que défini dans la revendication 15 prévoit en un aéronef comprenant un système d'ouverture et de fermeture à distance tel que spécifié ci-dessus.

À des fins d'illustration, quelques modes de réalisation de l'invention sont décrits en détail en référence aux dessins annexés. Dans cette description, des caractéristiques supplémentaires seront présentées, dont certaines sont définies dans les revendications dépendantes, et des avantages apparaîtront.

### Brève description des figures

Les figures annexées feront bien comprendre comment l'invention peut être réalisée. Sur ces figures, des références identiques désignent des éléments semblables.
La figure 1 représente une vue en perspective éclatée du système de fermeture et d'ouverture à distance.
La figure 2 représente un bras d'articulation d'une porte sur laquelle sont fixés le premier module de fermeture et d'ouverture ainsi que le dispositif de verrouillage et de déverrouillage.
La figure 3 représente une vue de profil d'un aéronef équipé du système de fermeture et d'ouverture à distance.
La figure 4 représente une vue en perspective du système de fermeture et d'ouverture à distance.
La figure 5 représente une vue schématique du dispositif de fermeture et d'ouverture.
La figure 6 représente une vue en perspective du premier module de fermeture et d'ouverture.
La figure 7 représente une vue en perspective de la noix de liaison du premier module de fermeture et d'ouverture.
La figure 8 représente une coupe de la noix à ergot selon l'axe longitudinal de la vis de guidage.
La figure 9 représente une coupe de la noix à ergot emboîté dans la noix de liaison selon l'axe longitudinal de la vis de guidage.
La figure 10 représente une vue en perspective du premier module de fermeture et d'ouverture et du tube de guidage du deuxième module de fermeture et d'ouverture.
La figure 11 représente une vue en perspective du dispositif de verrouillage et de déverrouillage.
La figure 12 représente une vue schématique du dispositif de verrouillage et de déverrouillage.
La figure 13 représente une vue en perspective d'un premier détail du dispositif de verrouillage et de déverrouillage.
La figure 14 représente une coupe transversale d'un deuxième détail du dispositif de verrouillage et de déverrouillage.
La figure 15 représente une vue en perspective d'un troisième détail du dispositif de verrouillage et de déverrouillage.
La figure 16a représente une vue en perspective du troisième module de fixation.
La figure 16b représente une vue en perspective du premier module de fixation.
La figure 17 représente schématiquement une section du bras d'articulation selon un plan perpendiculaire aux liaisons pivots verticales.
La figure 18 représente une vue en perspective d'une rampe pour une douille de verrouillage du premier ou du troisième module de fixation.
La figure 19 représente une vue en perspective du deuxième module de fixation monté sur une structure solidaire du dormant.
La figure 20 représente une vue en perspective du bras d'articulation sur lequel ont été fixés le premier et le troisième module de fixation ainsi que le capot de protection.
La figure 21 représente une vue en perspective du bras d'articulation sur lequel ont été fixés le premier et le troisième module de fixation ainsi que le dispositif de commande et le deuxième module de fixation.
La figure 22 représente une vue en perspective de l'intérieur du fuselage de l'aéronef équipé des modules de fixation et dans lequel l'escalier d'accès et déployé.
La figure 23 représente schématiquement le procédé de fermeture à distance du vantail.
La figure 24 représente schématiquement un procédé de fermeture à distance du vantail.

### Description détaillée

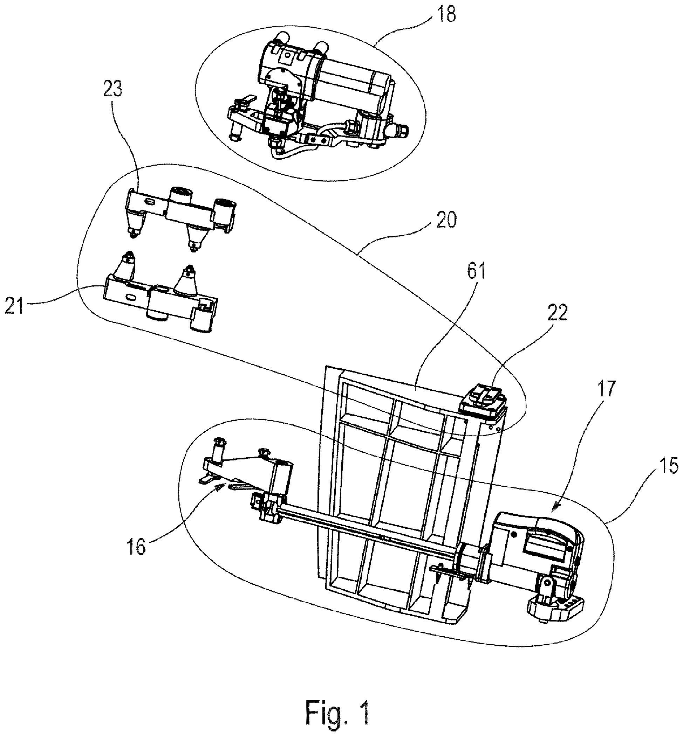

Le système 1 de fermeture et d'ouverture à distance est représenté sur la figure 1. Dans la suite de la description, le système 1 de fermeture et d'ouverture à distance sera appelé le système 1.

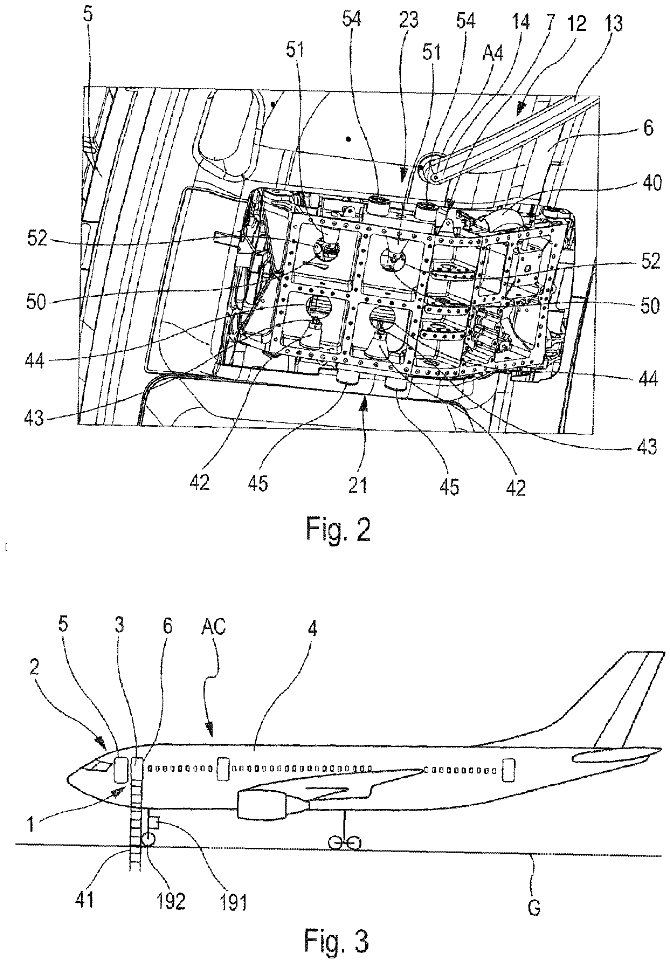

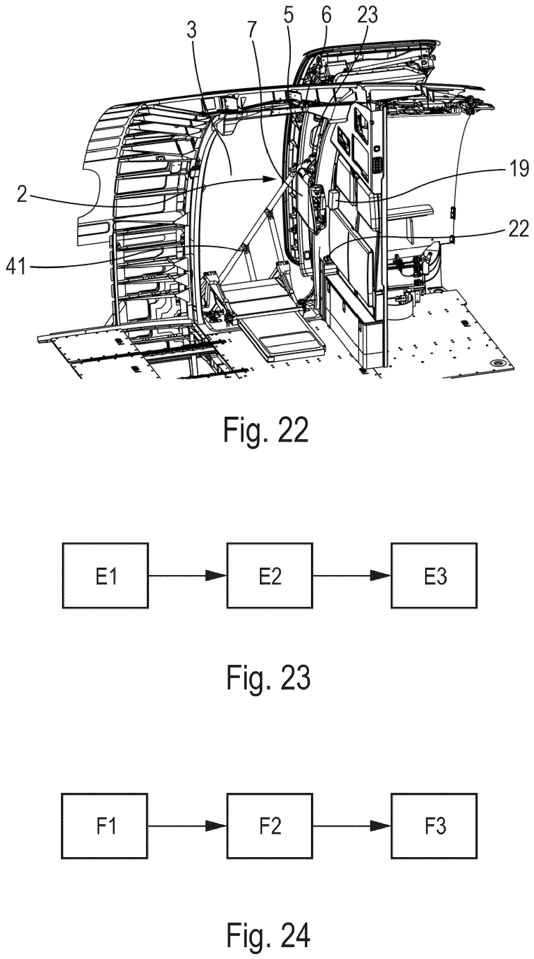

Le système 1 permet alternativement de fermer et d'ouvrir à distance une porte 2 prévue pour une ouverture d'accès 3 d'un fuselage 4 d'un aéronef AC. L'ouverture d'accès 3 peut être accessible du sol G par un escalier d'accès 41 qui peut être incorporé ou non à l'aéronef AC (figure 3, figure 22).

La porte 2 comporte un vantail 5, un dormant 6 et un bras d'articulation 7.

Le dormant 6 délimite l'ouverture d'accès 3. Le dormant 6 est fixé solidairement au fuselage 4.

Le vantail 5 est configuré pour se trouver alternativement dans une position fermée quand le vantail 5 obture l'ouverture d'accès 3 et une position ouverte quand le vantail 5 laisse l'ouverture d'accès 3 ouverte.

Le bras d'articulation 7 comporte une première extrémité 8 articulée au vantail 5 et une deuxième extrémité 9 articulée au dormant 6 de façon que le vantail 5 reste parallèle à lui-même pendant le passage de la position ouverte à la position fermée et vice-versa (c'est-à-dire pendant le passage de la position fermée à la position ouverte).

Par exemple, la première extrémité 8 est articulée au vantail 5 par une première liaison pivot 10 verticale et la deuxième extrémité 9 est articulée au dormant 6 par une deuxième liaison pivot 11 verticale. L'adjectif « vertical » correspond à une direction perpendiculaire au sol G quand l'aéronef AC est au sol G.

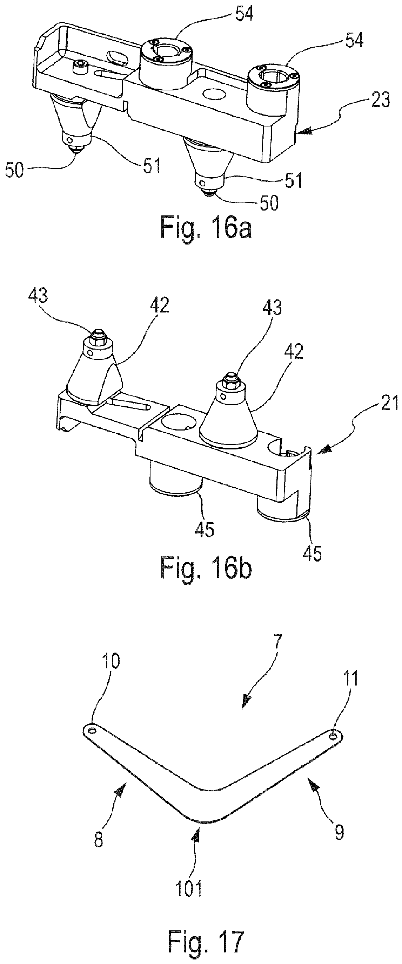

Par exemple (figure 17), le bras d'articulation 7 présente sensiblement une forme en V selon une section perpendiculaire aux liaisons pivots 10 et 11 verticales. La forme en V présente deux branches qui correspondent respectivement à la première extrémité 8 et la deuxième extrémité 9. Les deux branches du V se rencontrent en un point de rencontre 101. Dans cet exemple, la première liaison pivot 10 verticale est située au bout de la première extrémité 8 et la deuxième liaison pivot 11 verticale est située au bout de la deuxième extrémité 9.

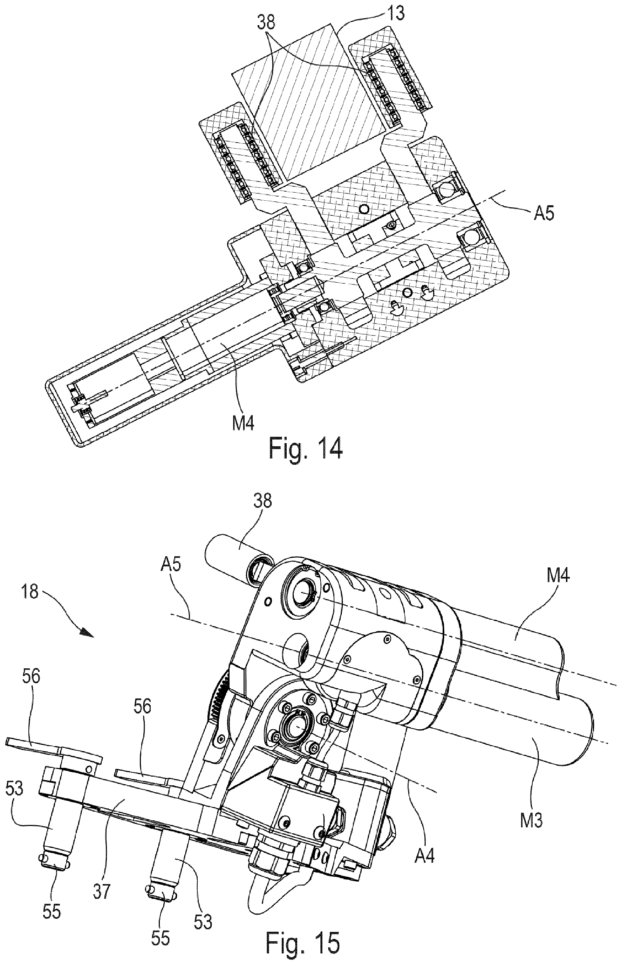

La porte 2 comporte en outre un mécanisme de verrouillage 12 configuré pour alternativement verrouiller le vantail 5 quand le vantail 5 est dans la position fermée et déverrouiller le vantail 5. Le mécanisme de verrouillage 12 comprend un levier de verrouillage 13 dont une extrémité 14 est montée rotatif sur le vantail 5 autour d'un axe de rotation A4 perpendiculaire au vantail 5 (figure 2, figure 15). Le levier de verrouillage 13 est configuré pour se trouver alternativement :
- dans une position de verrouillage dans laquelle le mécanisme de verrouillage 12 verrouille le vantail 5 et
- une position de déverrouillage dans laquelle le mécanisme de verrouillage 12 ne verrouille pas le vantail 5.

Le système 1 comprend au moins un dispositif de fermeture et d'ouverture 15, un dispositif de verrouillage et de déverrouillage 18 et un dispositif de commande 19. Le dispositif de fermeture 15 comporte un premier module de fermeture et d'ouverture 16 et un deuxième module de fermeture et d'ouverture 17.

Dans la suite de la description pour aider à la lecture, le dispositif de fermeture et d'ouverture 15 sera appelé le dispositif de fermeture 15. Le dispositif de verrouillage et de déverrouillage 18 sera appelé le dispositif de verrouillage 18. Le module de fermeture et d'ouverture 16 sera appelé le module de fermeture 16. Le module de fermeture et d'ouverture 17 sera appelé module de fermeture 17.

Dans la description, un premier objet « fixé de façon amovible » ou « assemblé de façon amovible » à un second objet signifie que le premier objet est prévu pour pouvoir être démonté à volonté du second objet après avoir été monté, fixé ou assemblé au second objet. Par ailleurs, un premier objet « solidaire » d'un second objet ou « fixé solidairement » à un second objet signifie que le premier objet n'est pas prévu pour être démonté après avoir été monté ou fixé au second objet (même s'il est possible de le démonter) et que le premier objet est fixe par rapport au second objet.

Le module de fermeture 16 est destiné à être fixé de façon amovible à la première extrémité 8 du bras d'articulation 7.

Dans l'exemple de la figure 17, le module de fermeture 16 est fixé de façon amovible entre le bout de la première extrémité 8 et le point de rencontre 101 des deux branches du V.

Le module de fermeture 17 est destiné à être fixé de façon amovible à une structure solidaire 61 du dormant 6.

Le module de fermeture 17 est apte à, alternativement :
- tirer vers lui le module de fermeture 16 de façon à amener le vantail 5 vers la position fermée et
- éloigner de lui le module de fermeture 16 de façon à amener le vantail 5 vers la position ouverte.

Le dispositif de verrouillage 18 est destiné à être fixé de façon amovible au bras d'articulation 7.

Par exemple, le dispositif de verrouillage 18 est destiné à être fixé de façon amovible au bras d'articulation 7 au droit du module de fermeture 16. Dans l'exemple de la figure 17, le dispositif de verrouillage 18 est fixé de façon amovible entre le bout de la première extrémité 8 et le point de rencontre 101 des deux branches du V.

Le dispositif de verrouillage 18 est configuré pour amener le levier de verrouillage 13 alternativement :
- dans la position déverrouillée pour un déverrouillage du vantail 5 et
- dans la position verrouillée pour un verrouillage du vantail 5.

Le dispositif de commande 19 est configuré pour transmettre :
- des ordres de commande de fermeture ou des ordres de commande d'ouverture du vantail 5 au dispositif de fermeture 15 et
- des ordres de commande de verrouillage ou des ordres de commande de déverrouillage du vantail 5 au dispositif de verrouillage 18.

Par exemple, le dispositif de commande 19 peut être fixé à l'intérieur de l'aéronef AC (figure 22).

Les ordres de commande de fermeture du vantail 5, d'ouverture du vantail 5 et les ordres de commande de verrouillage et de déverrouillage sont transmis par le dispositif de commande 19 en fonction d'ordres de commande transmis à distance par un utilisateur au dispositif de commande 19.

Le dispositif de commande 19 peut recevoir des ordres de commande de l'utilisateur d'une interface homme-machine 191. Un utilisateur peut commander, d'une part, une fermeture et verrouillage du vantail 5 ou, d'autre part, un déverrouillage et une ouverture du vantail 5 via l'interface homme-machine 191. L'interface homme-machine 191 peut correspondre à un clavier physique ou virtuel. Par exemple, le clavier peut comprendre un bouton physique ou virtuel permettant d'envoyer au dispositif de commande 19 un ordre de commande de fermeture et de verrouillage du vantail 5 lors d'une pression de l'utilisateur sur ce bouton. Le clavier peut également comprendre un bouton physique ou virtuel permettant d'envoyer au dispositif de commande 19 un ordre de commande de déverrouillage et d'ouverture du vantail 5 lors d'une pression de l'utilisateur sur ce bouton. En fonction de l'un ou l'autre des ordres de commande que le dispositif de commande 19 reçoit de l'interface homme-machine 191, il transmet des ordres de commande de fermeture ou des ordres de commande d'ouverture du vantail 5 au dispositif de fermeture 15 et des ordres de commande de verrouillage ou des ordres de commande de déverrouillage du vantail 5 au dispositif de verrouillage 18. Avantageusement, l'interface homme-machine 191 est montée sur une partie de l'aéronef AC facilement accessible à un utilisateur au sol G. Par exemple, elle est montée sur le train d'atterrissage avant 192. Elle peut également être détachable de l'aéronef AC. L'interface homme-machine 191 peut également comprendre les boutons physiques ou virtuels permettant le déploiement ou le repliement de l'escalier d'accès 41. De plus, l'interface homme-machine 191 peut comprendre un dispositif d'affichage, tel qu'un écran ou des signaux lumineux. Le dispositif d'affichage peut indiquer à l'utilisateur la confirmation de la fermeture et le verrouillage du vantail 5 ou bien l'ouverture du vantail 5. Par exemple, si le dispositif de commande 19 transmet à l'interface homme-machine 191 un signal de confirmation de fermeture (et de verrouillage) du vantail 5, un signal lumineux est activé (s'allume). Si le dispositif de commande 19 transmet à l'interface homme-machine 191 un signal de confirmation de d'ouverture du vantail 5, un autre signal lumineux est activé. Les signaux échangés entre l'interface homme-machine 191 et le dispositif de commande 19, tels que les ordres de commande, peuvent être transmis par une liaison filaire ou une liaison sans fil.

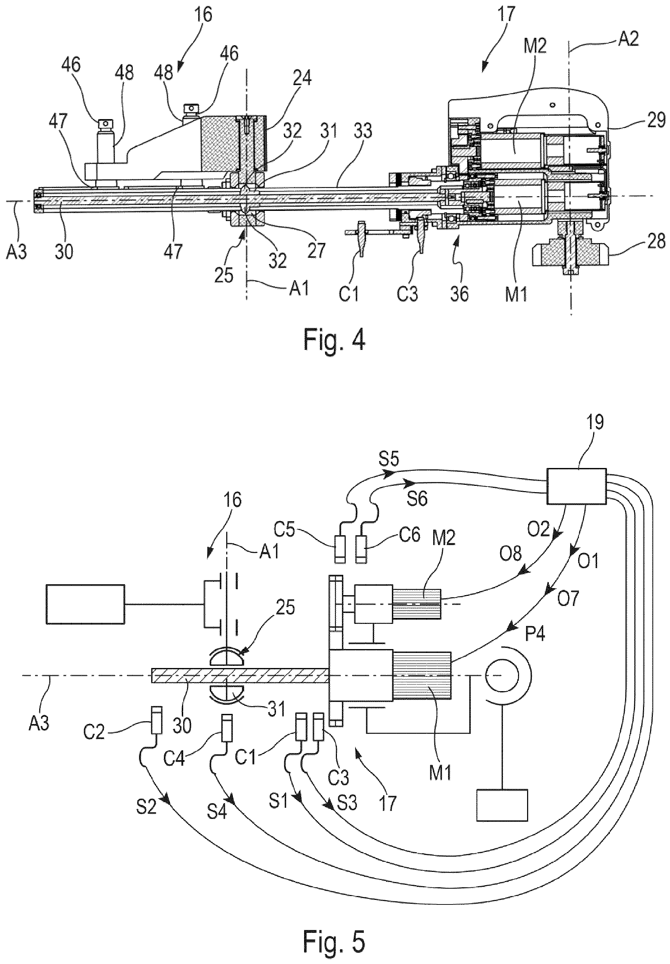

Le module de fermeture 17 peut comprendre un système vis-noix qui comporte une vis de guidage 30 et une noix à ergot 31, comme représenté sur la figure 4.

La vis de guidage 30 présente un axe de rotation longitudinal A3 (figure 4 et figure 5). La vis de guidage 30 est configurée pour entrer en rotation autour de son axe de rotation longitudinal A3.

La noix à ergot 31 est vissée à la vis de guidage 30. La noix à ergot 31 est assemblée de façon amovible au module de fermeture 16. La noix à ergot 31 est configurée pour se déplacer en translation le long de la vis de guidage 30 quand la vis de guidage 30 entre en rotation autour de son axe de rotation longitudinal A3. Le sens de la translation de la noix à ergot 31 dépend du sens de rotation de la vis de guidage 30.

La translation de la noix à ergot 31 entraîne alternativement :
- un rapprochement du module de fermeture 16 vers le module de fermeture 17 de façon à amener le vantail 5 vers la position fermée, et
- un éloignement du module de fermeture 16 du module de fermeture 17 de façon à amener le vantail 5 vers la position ouverte.

Comme représenté sur la figure 4, le module de fermeture 16 peut comporter un support de fixation 24 et une noix de liaison 25.

Le support de fixation 24 est destiné à être fixé de façon amovible à la première extrémité 8 du bras d'articulation 7.

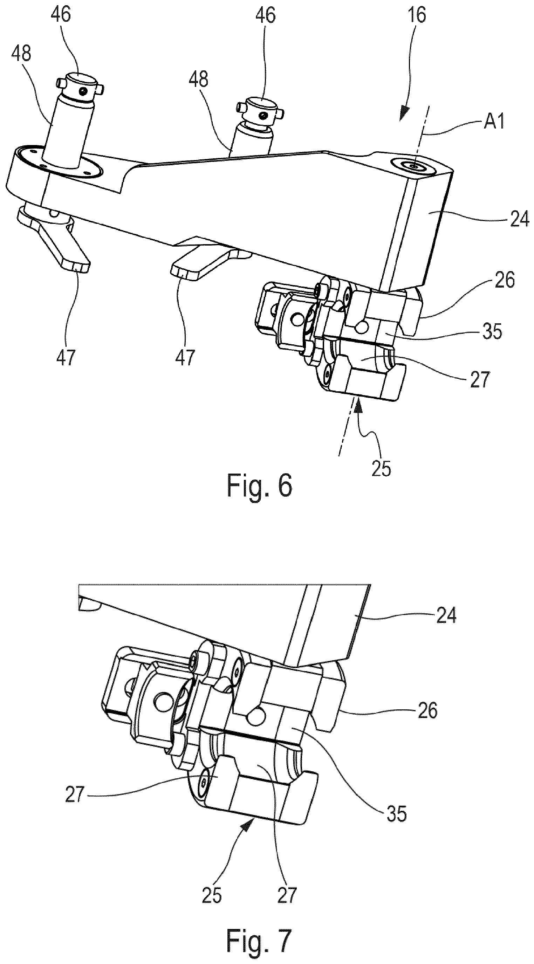

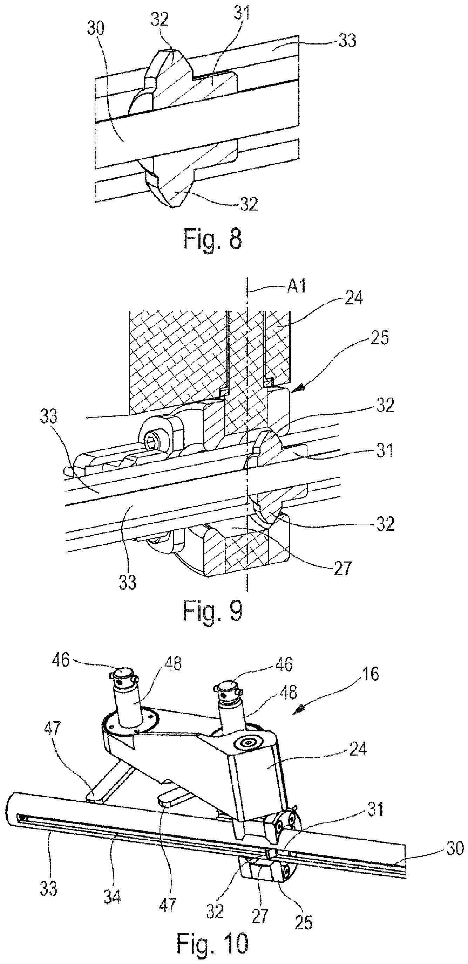

La noix de liaison 25 est montée rotatif au support de fixation 24 autour d'un axe de rotation A1 (figure 4, figure 9). La noix de liaison 25 présente une bague de guidage 26 ayant un diamètre confondu avec l'axe de rotation A1 de la noix de liaison 25. La bague de guidage 26 présentant une rainure circulaire interne 27 (figure 4, figure 6, figure 7, figure 9 et figure 10). La bague de guidage 26 peut être en partie ouverte comme représenté sur la figure 5 et la figure 6. La noix à ergot 31 présente au moins un ergot 32 destiné à être assemblé par emboîtement de façon amovible au moins en partie dans la rainure circulaire interne 27 de la bague de guidage 26 (figure 8 et figure 9). L'axe de rotation A1 de la noix de liaison 25 est destiné à être perpendiculaire à l'axe de rotation longitudinal A3 de la vis de guidage 30 quand la noix à ergot 31 est assemblée par emboîtement à la rainure circulaire interne 27 de la bague de guidage 26.

Comme représenté sur la figure 8 et la figure 9, la noix à ergot 31 peut comprendre deux ergots 32 s'étendant l'un par rapport à l'autre dans des sens diamétralement opposés.

Comme représenté sur la figure 4, le module de fermeture 17 peut comporter un support de fixation 28, un support auxiliaire 29, un tube de guidage 33 et un actionneur M1.

Le support de fixation 28 est destiné à être fixé de façon amovible à la structure solidaire 61 du dormant 6.

Le support auxiliaire 29 est monté rotatif au support de fixation 28 autour d'un axe de rotation A2 vertical. La vis de guidage 30 est montée rotatif au support auxiliaire 29 autour de son axe de rotation longitudinal A3. L'axe de rotation A2 vertical peut être sensiblement perpendiculaire à l'axe de rotation longitudinal A3.

Le tube de guidage 33 entoure de façon concentrique la vis de guidage 30, c'est-à-dire le tube de guidage 33 présente un axe longitudinal confondu avec l'axe de rotation longitudinal A3 de la vis de guidage 30. Le tube de guidage 33 est fixé solidairement au support auxiliaire 29. Le tube de guidage 33 comprend au moins une fente longitudinale 34. La ou les fentes longitudinales s'étendent parallèlement à l'axe de rotation longitudinal A3. Le ou les ergots 32 de la noix à ergot 31 fait saillie sur le tube de guidage 33 à travers la ou les fentes longitudinales 34. Comme représenté sur la figure 10, le tube de guidage 33 peut comprendre deux fentes longitudinales 34 prévues pour laisser les ergots 32 d'une noix à ergot 31 faire saillie sur le tube de guidage 33 (figure 8 et figure 9). Par ailleurs, le tube de guidage 33 est configuré pour s'engager dans la bague de guidage 26 de la noix de liaison 25. L'actionneur M1 est configuré pour entraîner en rotation la vis de guidage 30 autour de son axe de rotation longitudinal A3. Le dispositif de commande 19 est apte à envoyer à l'actionneur M1 un ordre de commande O1 représentatif d'un angle de rotation de la vis de guidage 30 destiné à être mis en oeuvre par le premier actionneur M1. Les ordres de commande de fermeture ou d'ouverture du vantail 5 comprennent l'ordre de commande O1 représentatif de l'angle de rotation de la vis de guidage 30 (figure 5).

Ainsi, une rotation de la vis de guidage 30 entraîne une translation de la noix à ergot 31 bloquée en rotation par le ou les ergots 32 faisant saillie sur le tube de guidage 33 à travers la ou les fentes longitudinales 34. La translation de la noix à ergot 31 est parallèle à l'axe de rotation longitudinal A3 de la vis de guidage 30. La translation de la noix à ergot 31 emboîtée dans la rainure circulaire interne 27 de la bague de guidage 26 entraînant alternativement :
- un éloignement du module de fermeture 16 par rapport du module de fermeture 17 suite à un ordre de commande d'ouverture du dispositif de commande 19 et
- un rapprochement du module de fermeture 16 vers le module de fermeture 17 suite à un ordre de commande de fermeture du dispositif de commande 19.

La noix de liaison 25 peut comprendre au moins une encoche 35 destinée à laisser le passage du ou des ergots 32 de la noix à ergot 31 lorsque le ou les ergots 32 en translation parallèle à l'axe de rotation longitudinal A3 de la vis de guidage 30 se trouvent face à la ou les encoches 35. Comme représenté sur la figure 6 et la figure 7, la noix de liaison peut comprendre deux encoches 35 prévues pour laisser le passage des deux ergots 32 (figure 8, figure 10). Comme représenté sur la figure 10, une des deux encoches 35 peut correspondre à la partie ouverte de la bague de guidage 26.

Le module de fermeture 17 peut aussi comprendre un actionneur M2 configuré pour entraîner en rotation un ensemble 36 comprenant la vis de guidage 30, l'actionneur M1 et le tube de guidage 33 autour de l'axe de rotation longitudinal A3 de la vis de guidage 30. Le dispositif de commande 19 est apte à envoyer à l'actionneur M2 un ordre de commande O2 représentatif d'un angle de rotation dudit ensemble 36 destiné à être mis en oeuvre par l'actionneur M2. Les ordres de commande de fermeture ou d'ouverture du vantail 5 peuvent comprendre l'ordre de commande représentatif de l'angle de rotation de l'ensemble 36.

La rotation de l'ensemble 36 permet alternativement :
- d'amener le ou les ergots 32 face à la ou aux encoches 35 pour un passage du ou des ergots 32 par la ou les encoches 35 (figure 10) :
   ∘ en vue d'un emboîtement du ou des ergots 32 dans la rainure circulaire interne 27 de la bague de guidage 26 ou
   ∘ en vue d'une séparation du ou des ergots 32 de la rainure circulaire interne 27 de la bague de guidage 26, ou
- d'éloigner angulairement le ou les ergots 32 de la ou des encoches 35 (figure 9) :
   ∘ pour emboîter le ou les ergots 32 dans la rainure circulaire interne 27 de la bague de guidage 26 ou
   ∘ pour disjoindre le ou les ergots 32 de la rainure circulaire interne 27 de la bague de guidage 26 après une séparation du ou des ergots 32 de la rainure circulaire interne 27 de la bague de guidage 26.

Le dispositif de fermeture 15 peut en outre comporte un capteur de position C1, un capteur de position C2, un capteur de position C3 et un capteur de position C4 (figure 4, figure 5).

Le capteur de position C1 est configuré pour transmettre au dispositif de commande 19 un signal électrique S1 quand la noix à ergot 31 se trouve dans une position de fermeture le long de la vis de guidage 30. Le signal électrique S1 transmis par le capteur de position C1 est représentatif d'une position de la noix à ergot 31 quand la noix à ergot 31 se trouve dans la position de fermeture le long de la vis de guidage 30. La position de fermeture le long de la vis de guidage 30 correspond à une position que la noix à ergot 31 doit présenter pour que le vantail 5 soit dans la position fermée.

Le capteur de position C2 est configuré pour transmettre au dispositif de commande 19 un signal électrique S2 quand la noix à ergot 31 se trouve dans une position d'ouverture le long de la vis de guidage 30. Le signal électrique S2 transmis par le capteur de position C2 est représentatif d'une position de la noix à ergot 31 quand la noix à ergot 31 se trouve dans la position d'ouverture le long de la vis de guidage 30. La position d'ouverture le long de la vis de guidage 30 correspond à une position que la noix à ergot 31 doit présenter pour que le vantail 5 soit dans la position ouverte.

Le capteur de position C3 est configuré pour transmettre au dispositif de commande 19 un signal électrique S3 quand la noix à ergot 31 se trouve dans une position par défaut le long de la vis de guidage 30. Le signal électrique S3 transmis par le capteur de position C3 est représentatif d'une position de la noix à ergot 31 quand la noix à ergot 31 se trouve dans la position par défaut le long de la vis de guidage 30. La noix à ergot 31 peut se trouver dans la position par défaut quand le module de fermeture 17 n'est pas fixé à la structure solidaire 61 du dormant 6, ou bien quand aucun ordre de commande n'est transmis au module de fermeture 17 pour une ouverture ou une fermeture du vantail 5 ou bien avant le démontage du module de fermeture 17. La position par défaut peut correspondre à une position de la noix à ergot 31 au plus proche du support de fixation 28 le long de la vis de guidage 30.

Le capteur de position C4 est configuré pour transmettre au dispositif de commande 19 un signal électrique S4 quand la noix à ergot 31 se trouve dans une position d'emboîtement. Le signal électrique S4 transmis par le capteur de position C4 est représentatif d'une position de la noix à ergot 31 quand la noix à ergot 31 se trouve dans la position d'emboîtement. La position d'emboîtement correspond à une position dans laquelle le ou les ergots 32 de la noix à ergot 31 se trouvent dans la rainure circulaire interne 27 de la bague de guidage 26.

Le dispositif de fermeture 15 peut aussi comprendre un capteur de position C5 et un capteur de position C6 (figure 5).

Le capteur de position C5 est configuré pour transmettre au dispositif de commande 19 un signal électrique S5 quand le ou les ergots 32 de la noix à ergot 31 se trouvent face à la ou aux encoches 35. Le signal électrique S5 transmis par le capteur de position C5 est représentatif d'une position angulaire de l'actionneur M2 quand le ou les ergots 32 de la noix à ergot 31 se trouvent face à la ou aux encoches 35. Le capteur de position C6 est configuré pour transmettre au dispositif de commande 19 un signal électrique S6 quand le ou les ergots 32 de la noix à ergot 31 ne se trouvent pas face à la ou aux encoches 35. Le signal électrique S6 transmis par le capteur de position C6 est représentatif d'une position angulaire de l'actionneur M2 quand le ou les ergots 32 de la noix à ergot 31 ne se trouvent pas face à la ou aux encoches 35 (figure 9).

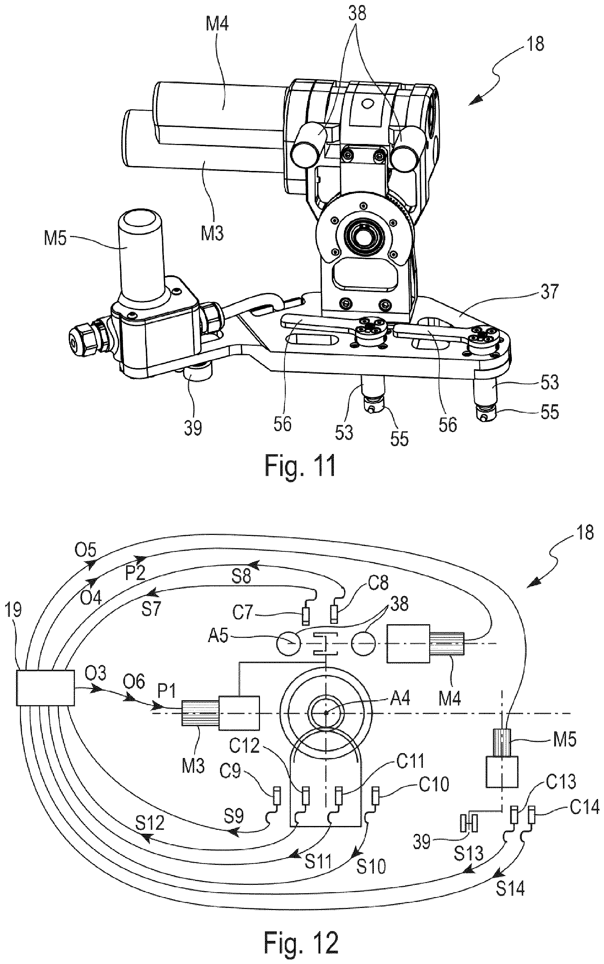

Comme représenté sur la figure 11, le dispositif de verrouillage 18 qui coopère avec le dispositif de fermeture 15 comprend un support de fixation 37, deux doigts de guidage 38, un actionneur M3 et un actionneur M4.

Le support de fixation 37 est destiné à être fixé de façon amovible au bras d'articulation 7.

Les deux doigts de guidage 38 sont destinés à enserrer entre eux le levier de verrouillage 13 (figure 2, figure 14). Les deux doigts de guidage 38 sont montés rotatif au support de fixation 37 autour de deux axes de rotation A4 et A5 (figure 14, figure 15).

L'actionneur M3 est configuré pour entraîner en rotation selon un premier angle de rotation les deux doigts de guidage 38 autour de l'axe de rotation A4 du levier de verrouillage 13 quand le vantail 5 est dans la position fermée. Le dispositif de commande 19 est apte à envoyer à l'actionneur M3 un ordre de commande O3 représentatif du premier angle de rotation des deux doigts de guidage 38. L'ordre de commande O3 est destiné à être mis en oeuvre par l'actionneur M3. Les ordres de commande de verrouillage ou de déverrouillage du vantail 5 comprennent l'ordre de commande O3 représentatif du premier angle de rotation des deux doigts de guidage 38.

L'actionneur M4 est configuré pour entraîner en rotation selon un deuxième angle de rotation les deux doigts de guidage 38 autour d'un axe de rotation A5 qui est perpendiculaire à l'axe de rotation A4 du levier de verrouillage 13 quand le vantail 5 est dans la position fermée. Le dispositif de commande 19 est apte à envoyer à l'actionneur M4 un ordre de commande O4 représentatif du deuxième angle de rotation des deux doigts de guidage 38. L'ordre de commande O4 est destiné à être mis en oeuvre par l'actionneur M4. Les ordres de commande de verrouillage ou de déverrouillage du vantail 5 comprennent l'ordre de commande O4 représentatif du deuxième angle de rotation des deux doigts de guidage 38 (figure 12).

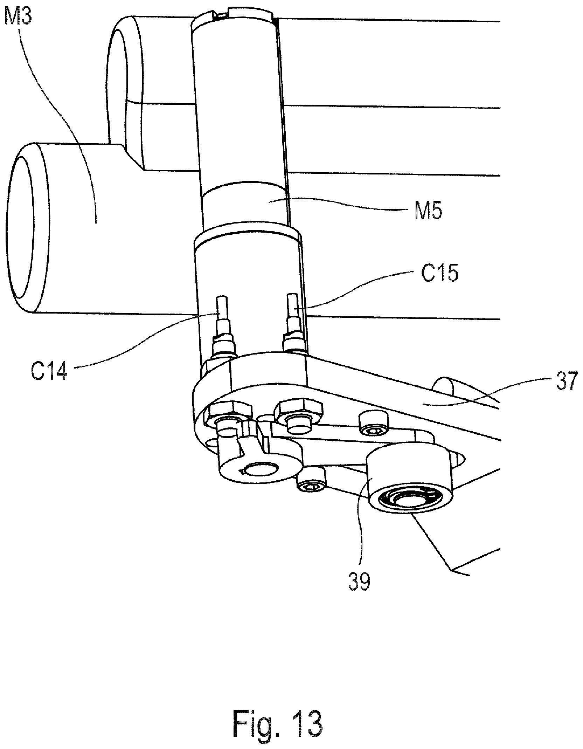

Le dispositif de verrouillage 18 peut comprendre en outre un doigt de déblocage 39 et un actionneur M5 (figure 13).

Le doigt de déblocage 39 est configuré pour désenclencher un élément de blocage 40 destiné à bloquer le vantail 5 dans la position ouverte après une ouverture du vantail 5. L'élément de blocage 40 peut correspondre à un doigt de verrouillage qui s'enclenche automatiquement en bloquant le vantail 5 dans sa position ouverte quand l'on amène le vantail 5 dans la position ouverte. Habituellement, afin de désenclencher le doigt de verrouillage (donc débloquer le vantail 5), un utilisateur agit manuellement sur l'élément de blocage 40 pour désenclencher le doigt de verrouillage. Le doigt de déblocage 39 du dispositif de verrouillage 18 du système 1 permet d'agir sur l'élément de blocage 40 pour désenclencher le doigt de verrouillage de l'élément de blocage 40 à distance.

L'actionneur M5 est configuré pour entraîner en translation le doigt de déblocable 39 de façon à désenclencher l'élément de blocage 40 en amenant le doigt de déblocage 39 dans une position de déblocage. Le dispositif de commande 19 étant apte à envoyer à l'actionneur M5 un ordre de commande O5 S14. L'ordre de commande O5 est destiné à être mis en oeuvre par l'actionneur M5. Les ordres de commande de déverrouillage du vantail 5 comprennent l'ordre de commande O5 représentatif de la distance de translation du doigt de déblocage 39 (figure 12).

Le dispositif de verrouillage 18 peut comprendre en outre un capteur de position C7, un capteur de position C8, un capteur de position C9, un capteur de position C10, un capteur de position C11 et un capteur de position C12 (figure 12).

Le capteur de position C7 est configuré pour transmettre au dispositif de commande 19 un signal électrique S7 quand les deux doigts de guidage 38 enserrent le levier de verrouillage 13. Le signal électrique S7 transmis par le capteur de position C7 est représentatif d'une position des deux doigts de guidage 38 quand ils enserrent le levier de verrouillage 13.

Le capteur de position C8 est configuré pour transmettre au dispositif de commande 19 un signal électrique S8 quand les deux doigts de guidage 38 n'enserrent pas le levier de verrouillage 13. Le signal électrique S8 transmis par le capteur de position C8 est représentatif d'une position des deux doigts de guidage 38 quand ils n'enserrent pas le levier de verrouillage 13.

Le capteur de position C9 est configuré pour transmettre au dispositif de commande 19 un signal électrique S9 quand les deux doigts de guidage 38 se trouvent dans une position de verrouillage autour de l'axe de rotation A4 du levier de verrouillage 13. Le signal électrique S9 transmis par le capteur de position C9 est représentatif d'une position des deux doigts de guidage 38 quand les deux doigts de guidage 38 se trouvent dans la position de verrouillage autour de l'axe de rotation A4 du levier de verrouillage 13. La position de verrouillage correspond à une position que les deux doigts de guidage 38 doivent présenter pour que le levier de verrouillage 13 soit dans la position verrouillée.

Le capteur de position C10 est configuré pour transmettre au dispositif de commande 19 un signal électrique S10 quand les deux doigts de guidage 38 se trouvent dans une position de déverrouillage autour de l'axe de rotation A4 du levier de verrouillage 13. Le signal électrique S10 transmis par le capteur de position C10 est représentatif d'une position des deux doigts de guidage 38 quand les deux doigts de guidage 38 se trouvent dans la position de déverrouillage autour de l'axe de rotation A4 du levier de verrouillage 13. La position de déverrouillage correspond à une position que les deux doigts de guidage 38 doivent présenter pour que le levier de verrouillage 13 soit dans la position déverrouillée.

Le capteur de position C11 est configuré pour transmettre au dispositif de commande 19 un signal électrique S11 quand les deux doigts de guidage 38 se trouvent dans une position par défaut. Le signal électrique S11 transmis par le capteur de position C11 est représentatif d'une position des deux doigts de guidage 38 quand les deux doigts de guidage 38 se trouvent dans la position par défaut. Les deux doigts de guidage peuvent se trouver dans la position par défaut quand le dispositif de verrouillage 18 n'est pas fixé au bras articulé 7, ou bien quand aucun ordre de commande n'est transmis au dispositif de verrouillage 18 pour un verrouillage ou un déverrouillage du vantail 5 ou bien avant le démontage du dispositif de verrouillage 18. La position par défaut peut correspondre à une position dans laquelle les deux doigts de guidage 38 n'enserrent pas le levier de verrouillage 13.

Le capteur de position C12 est configuré pour transmettre au dispositif de commande 19 un signal électrique S12 quand l'escalier d'accès 41 à l'ouverture d'accès 3 est déployé.

Le dispositif de verrouillage 18 peut comprendre en outre un capteur de position C13 et un capteur de position C14 (figure 12, figure 13).

Le capteur de position C13 est configuré pour transmettre au dispositif de commande 19 un signal électrique S13 quand le doigt de déblocage 38 ne se trouve pas dans la position de déblocage. Le signal électrique S13 transmis par le capteur de position C13 est représentatif de la position du doigt de déblocage 38 quand il ne débloque pas l'élément de blocage 40.

Le capteur de position C14 est configuré pour transmettre au dispositif de commande 19 un signal électrique S14 quand le doigt de déblocage 39 se trouve dans la position de déblocage. Le signal électrique S14 transmis par le capteur de position C14 est représentatif de la position de déblocage du doigt de déblocage 39.

De préférence, afin de fixer de façon amovible le module de fermeture 16 à la première extrémité 8 du bras d'articulation 7, le module de fermeture 17 à la structure solidaire 61 du dormant 6 et le dispositif de verrouillage 18 au bras d'articulation 7, le système comprend un dispositif de fixation 20 (figure 1, figure 16a, figure 16b, figure 20, figure 21).

De façon non limitative, les modules de fermeture 16, 17 sont fabriqués en aluminium.

Le dispositif de fixation 20 comporte un module de fixation 21, un module de fixation 22 et un module de fixation 23.

Le module de fixation 21 est configuré pour être fixé de façon solidaire à la première extrémité 8 du bras d'articulation 7.

Dans l'exemple de la figure 17, le module de fixation 21 est fixé de façon solidaire entre le bout de la première extrémité 8 et le point de rencontre 101 des deux branches du V.

Le module de fermeture 16 est destiné à être fixé de façon amovible au module de fixation 21.

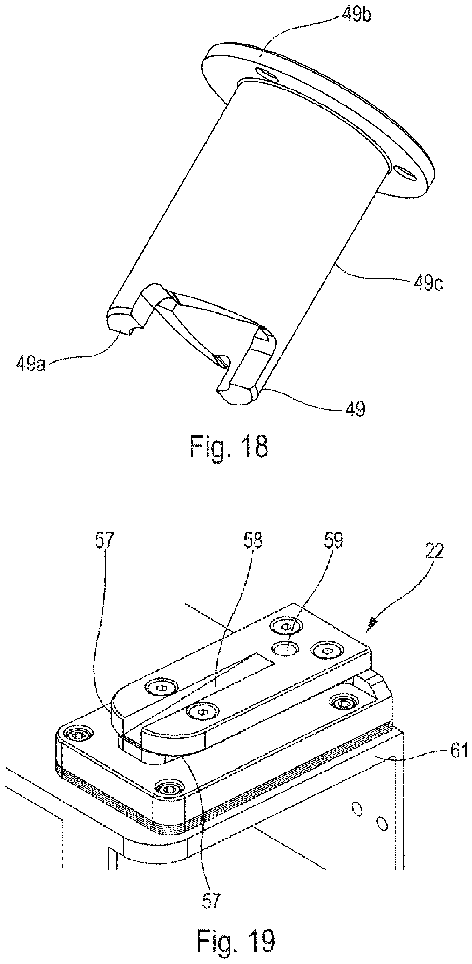

Dans un mode de réalisation, comme représenté sur la figure 1 et la figure 16b, le module de fixation 21 est destiné à être boulonné à la première extrémité du bras d'articulation 7 pour être fixé de façon solidaire à la première extrémité 8 du bras d'articulation 7. Le boulonnage du module de fixation 21 est réalisé à l'aide de boulons 43 traversant des ouvertures déjà existantes dans le bras d'articulation 7 (figure 2). Il n'est donc pas nécessaire de modifier la structure du bras d'articulation 7 par la création de nouvelles ouvertures pour introduire les boulons 43. De plus, le module de fixation 21 comprend deux cônes de serrage 42. Ces cônes de serrage 42 permettent d'avoir accès à l'écrou des boulons 43 en positionnant le point de boulonnage face à des ouvertures 44 déjà existantes dans le bras d'articulation 7. Cela évite une modification de la structure du bras d'articulation 7. Avantageusement, le support de fixation 24 du module de fermeture 16 comprend deux axes de verrouillage 48 et le module de fixation 21 comprend deux douilles de verrouillage 45. Chacun des deux axes de verrouillage 48 est destiné à être introduit dans une douille de verrouillage 45. Les deux axes de verrouillage 48 présentent chacun un goujon de fixation quart de tour 46 autorisant une fixation de type quart de tour en coopération avec une rampe de verrouillage 49 comprise dans chacun des deux douilles de verrouillage 45 (figure 18). Par exemple, la rampe de verrouillage 49 correspond à une première extrémité 49a d'un cylindre 49c coaxial avec les douilles de verrouillage 45. Le cylindre 49c est fixé à sa deuxième extrémité 49b à la sortie des douilles de verrouillage 45. Chacun des deux axes de verrouillage 48 comprend également une poignée 47 permettant à un utilisateur d'appliquer une rotation au goujon de fixation quart de tour 46 de chacun des deux axes de verrouillage 48 pour fixer de façon amovible le module de fermeture 16 au module de fixation 21 ou détacher le module de fermeture 16 du module de fixation 21. De préférence, une douille des deux douilles de verrouillage 45 présente une forme différente de l'autre douille. Par exemple, une douille de verrouillage 45 présente un cylindre de section circulaire et l'autre douille de verrouillage 45 présente une forme cylindrique de section oblongue. Les deux axes de verrouillage 48 présentent chacun une forme adaptée à la forme de la douille de verrouillage 45 dans laquelle il est destiné à être introduit. Cela permet qu'un utilisateur ne se trompe pas dans le sens de placement du module de fermeture 16 par rapport au module de fixation 21 lors de sa fixation dans le module de fixation 21. De façon non limitative, les douilles de verrouillage 45 sont fabriquées en acier inoxydable afin d'éviter la corrosion.

Par ailleurs, le dispositif de fixation 20 comporte un module de fixation 23 configuré pour être fixé de façon solidaire au bras d'articulation 7. Par exemple, le module de fixation 23 est destiné à être fixé de façon solidaire au bras d'articulation 7 au droit du module de fixation 21. Dans l'exemple de la figure 17, le module de fixation 23 est fixé de façon solidaire entre le bout de la première extrémité 8 et le point de rencontre 101 des deux branches du V.

Le module de verrouillage 18 est destiné à être fixé de façon amovible au module de fixation 23.

Dans un mode de réalisation, comme représenté sur la figure 1 et la figure 16a, le module de fixation 23 est destiné à être boulonné au bras d'articulation 7 pour être fixé de façon solidaire au bras d'articulation 7. Comme pour le module de fixation 21, le boulonnage du module de fixation 23 est réalisé à l'aide de boulons 50 traversant des ouvertures déjà existantes dans le bras d'articulation 7. Il n'est donc pas nécessaire de modifier la structure du bras d'articulation 7 par la création de nouvelles ouvertures pour introduire les boulons 50. De même, le module de fixation 23 comprend deux cônes de serrage 51. Ces cônes de serrage 51 permettent d'avoir accès à l'écrou des boulons 50 en positionnant le point de boulonnage face à des ouvertures 52 déjà existantes dans le bras d'articulation 7. Cela évite une modification de la structure du bras d'articulation 7. Avantageusement, le support de fixation 28 du module de verrouillage 18 comprend deux axes de verrouillage 53 et le module de fixation 23 comprend deux douilles de verrouillage 54. Chacun des deux axes de verrouillage 53 est destiné à être introduit dans une douille de verrouillage 54. Les deux axes de verrouillage 53 présentent chacun un goujon de fixation quart de tour 55 autorisant une fixation de type quart de tour en coopération avec une rampe de verrouillage 49 comprise dans chacun des deux douilles de verrouillage 54 (figure 18). Par exemple, la rampe de verrouillage 49 correspond à une première extrémité 49a d'un cylindre 49c coaxial avec les douilles de verrouillage 45. Le cylindre 49c est fixé à sa deuxième extrémité 49b à la sortie des douilles de verrouillage 45. Chacun des deux axes de verrouillage 53 comprend également une poignée 56 permettant à un utilisateur d'appliquer une rotation au goujon de fixation quart de tour 55 de chacun des deux axes de verrouillage 53 pour fixer de façon amovible le module de verrouillage 18 au module de fixation 23 ou détacher le module de verrouillage 18 du module de fixation 23. De préférence, une douille des deux douilles de verrouillage 54 présente une forme différente de l'autre douille. Par exemple, une douille de verrouillage présente un cylindre de section circulaire et l'autre douille de verrouillage présente une forme cylindrique de section oblongue. Les deux axes de verrouillage 53 présentent chacun une forme adaptée à la forme de la douille de verrouillage 54 dans laquelle il est destiné à être introduit. Cela permet qu'un utilisateur ne se trompe pas dans le sens de placement du module de verrouillage 18 par rapport au module de fixation 23 lors de sa fixation au module de fixation 23. De façon non limitative, les douilles de verrouillage 54 sont fabriquées en acier inoxydable afin d'éviter la corrosion.

De plus, le dispositif de fixation 20 comporte un module de fixation 22 configuré pour être fixé de façon solidaire à la structure solidaire 61 du dormant 6 (figure 19, figure 22). Le module de fermeture 17 est destiné à être fixé de façon amovible au module de fixation 22. Le module de fixation 22 est destiné à être boulonné à la structure solidaire 61 du dormant 6. Avantageusement, le support de fixation 28 du module de fermeture 17 comprend deux rails opposés (non représentés) et le module de fixation 22 comprend deux coulisses 57. Chacun des deux rails est destiné à coulisser dans chacune des coulisses 57. Par ailleurs, le support de fixation 28 peut comporter un doigt d'arrêt (non représenté) monté sur ressort et faisant saillie entre les deux rails. Le module de fixation 22 peut comporter une rampe 58 et une ouverture d'arrêt 59 (figure 19). Le doigt d'arrêt est destiné à coulisser sur la rampe lors du coulissement des deux rails dans les coulisses 57 jusqu'à atteindre l'ouverture d'arrêt 59. Pendant ce coulissement, le doigt d'arrêt diminue en hauteur en appuyant sur le ressort. Lorsque le doigt d'arrêt atteint l'ouverture d'arrêt 59, le doigt d'arrêt s'étend sous la force du ressort en s'introduisant dans l'ouverture d'arrêt 59 afin de bloquer le module de fermeture 17 par rapport au module de fixation 22. Un utilisateur peut désenclencher le doigt d'arrêt dans l'ouverture d'arrêt 59 s'il souhaite détacher le module de fermeture 17 du module de fixation 22.

La mise en place du système 1 peut être réalisée de la manière suivante.

Le module de fixation 21 est fixé de façon solidaire à la première extrémité 8 du bras d'articulation 7. Le module de fixation 22 est fixé de façon solidaire à la structure solidaire 61 du dormant 6. Enfin, le module de fixation 23 est fixé de façon solidaire au bras d'articulation 7.

Le support de fixation 24 du module de fermeture 16 est fixé de façon amovible au module de fixation 21. La vis de guidage 30 du module de fermeture 17 est introduite dans la bague de guidage 26 de la noix de liaison 25 du module de fermeture 16. Le support de fixation 28 du module de fermeture 17 est ensuite fixé de façon amovible au module de fixation 22. Enfin, le support de fixation 37 du dispositif de verrouillage est fixé de façon amovible au module de fixation 23.

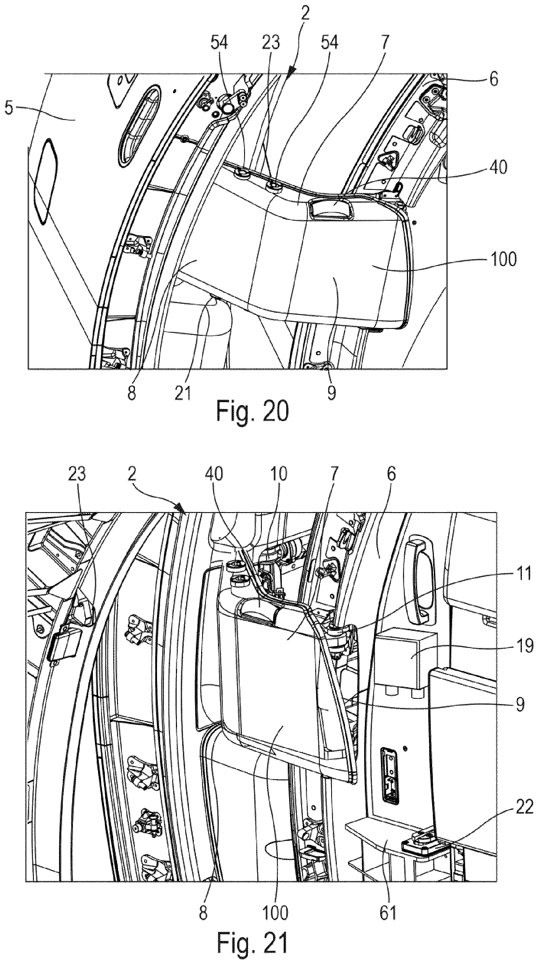

Si le bras d'articulation comprend un capot de protection 100 (généralement en plastique) (figure 20, figure 21), le capot de protection peut être retiré pour fixer solidairement les modules de fixation 21, 22, 23 au bras d'articulation 7. Le capot de protection 100 peut ensuite être remonté sur le bras d'articulation 7 après avoir réalisé des trous permettant aux douilles de verrouillage 45 d'être accessibles pour les axes de verrouillage 53.

L'invention concerne également un procédé de fermeture à distance du vantail 5 à l'aide de du système 1 (figure 23).

Le procédé de fermeture peut être mis en oeuvre quand un utilisateur envoie un ordre de commande de fermeture du vantail 5 au dispositif de commande 19 à l'aide de l'interface homme-machine 191.

Ledit procédé comprend au moins une étape E2 de fermeture et une étape E3 de verrouillage.

L'étape E2 de fermeture est mise en oeuvre par le dispositif de fermeture 15 en réponse à une réception d'ordre de commande de fermeture provenant du dispositif de commande 19 suite à une réception par le dispositif de commande 19 d'ordres de commande transmis à distance par l'utilisateur. Elle consiste en ce que le module de fermeture 17 tire vers lui le module de fermeture 16 de façon à amener le vantail 5 vers la position fermée.

L'étape E2 de fermeture peut comprendre :
- la transmission du dispositif de commande 19 à l'actionneur M1 d'un ordre de commande O1 représentatif d'un angle de rotation de la vis de guidage 30 susceptible d'amener le vantail 5 dans la position fermée,
- la mise en marche de l'actionneur M1 en fonction de l'ordre de commande O1,
- la rotation de la vis de guidage 30 entraînée par l'actionneur M1 selon l'angle de rotation susceptible d'amener le vantail 5 dans la position fermée,
- la translation de la noix à ergot 31 le long de la vis de guidage 30 entraînée par la rotation de la vis de guidage 30,
- la translation de la noix de liaison 25 le long de la vis de guidage 30 entraînée par la translation de la noix à ergot 31,
- la traction de la première extrémité 8 du bras d'articulation 7 par la translation de la noix à ergot 31 du module de fermeture 16 jusqu'à ce que le vantail 5 soit dans la position fermée.

Dans le cas où la porte 2 comprend un élément de blocage 40 du vantail 5, l'étape E2 de fermeture peut également comprendre la transmission du dispositif de commande 19 à l'actionneur M5 d'un ordre de commande O5 représentatif d'une distance de translation du doigt de déblocage 39. La transmission de l'ordre de commande O5 précède alors la transmission de l'ordre de commande O1.

Dans cette étape E2 de fermeture, le dispositif de commande peut recevoir le signal électrique S1 du capteur de position C1 lorsque la noix à ergot 31 se trouve dans la position de fermeture le long de la vis de guidage. Quand le dispositif de commande 19 reçoit ce signal électrique S1, le dispositif de commande 19 commande à l'actionneur M1 de stopper la rotation de la vis de guidage 30. Dans le cas où la porte 2 comprend un élément de blocage 40, le dispositif de commande 19 peut attendre de recevoir le signal électrique S14 qui confirme que l'élément de blocage 40 ne bloque plus le vantail 5 dans la position ouverte afin de transmettre l'ordre de commande O1.

Dans l'étape E3 de verrouillage le dispositif de verrouillage 18 amène le levier de verrouillage 13 dans la position de verrouillage pour un verrouillage du vantail 5 en réponse à une réception d'ordre de commande de verrouillage du dispositif de commande 19.

L'étape E3 de verrouillage peut comprendre :
- la transmission du dispositif de commande 19 à l'actionneur M3 d'un ordre de commande O3 représentatif d'un angle de rotation de mise en place des deux doigts de guidage 38 autour de l'axe de rotation A4 du levier de verrouillage 13 quand le vantail 5 est dans la position fermée. L'angle de rotation de mise en place est défini pour amener les deux doigts de guidage 38 face au levier de verrouillage 13,
- la mise en marche de l'actionneur M3 en fonction de l'ordre de commande O3 représentatif de l'angle de rotation de mise en place des deux doigts de guidage 38,
- la rotation des deux doigts de guidage 38 selon l'angle de rotation de mise en place des deux doigts de guidage 38,
- la transmission du dispositif de commande 19 à l'actionneur M4 d'un ordre de commande O4 représentatif d'un angle de rotation d'enserrement des deux doigts de guidage 38 autour d'un axe de rotation A5 perpendiculaire à l'axe de rotation A4 du levier de verrouillage 13 quand le vantail 5 est dans la position fermée. L'angle de rotation d'enserrement est défini pour amener les deux doigts de guidage 38 à enserrer le levier de verrouillage 13,
- la mise en marche de l'actionneur M4 en fonction de l'ordre de commande O4 représentatif de l'angle de rotation d'enserrement des deux doigts de guidage 38,
- la rotation des deux doigts de guidage 38 selon l'angle de rotation d'enserrement des deux doigts de guidage 38,
- la transmission du dispositif de commande 19 à l'actionneur M3 d'un ordre de commande O6 représentatif d'un angle de rotation de verrouillage des deux doigts de guidage 38 autour de l'axe de rotation A4 du levier de verrouillage 13 quand le vantail 5 est dans la position fermée. L'angle de rotation de verrouillage est défini pour amener les deux doigts de guidage 38 à faire tourner le levier de verrouillage 13 vers la position de verrouillage,
- la mise en marche de l'actionneur M3 en fonction de l'ordre de commande O6 représentatif de l'angle de rotation de verrouillage,
- la rotation des deux doigts de guidage 38 selon l'angle de rotation de verrouillage des deux doigts de guidage 38.

Dans cette étape E3, le dispositif de commande peut recevoir le signal électrique S7 du capteur de position C7 lorsque les deux doigts de guidage 38 enserrent le levier de verrouillage 13. Quand le dispositif de commande 19 reçoit ce signal électrique S7, le dispositif de commande 19 peut commencer à transmettre l'ordre de commande 06. Le dispositif de commande peut alors recevoir le signal électrique S9 du capteur de position C9 lorsque les deux doigts de guidage 38 se trouvent dans la position de verrouillage. Quand le dispositif de commande 19 reçoit ce signal électrique S9, le dispositif de commande 19 peut confirmer à l'utilisateur que le vantail 5 est fermé et verrouillé. La confirmation peut être transmise du dispositif de commande 19 à l'interface homme-machine 191 sous forme d'un signal électrique de confirmation de fermeture (et de verrouillage). Quand le vantail 5 est dans la position fermée, le dispositif de commande 19 peut commander aux actionneurs M1 et M2 d'entraîner la noix à ergot 31 dans sa position par défaut. Le dispositif de commande 19 peut également commander aux actionneurs M3 et M4 d'entraîner les doigts de guidage 38 dans leur position par défaut.

Le procédé peut également comprendre une étape E1 de mise en place de la noix à ergot 31. L'étape E1 de mise en place consiste à emboîter la noix à ergot 31 dans la noix de liaison 25. Cette étape peut précéder les étapes E2 et E3.

L'étape E1 de mise en place de la noix à ergot 31 peut comprendre :
- la transmission du dispositif de commande 19 à l'actionneur M2 d'un ordre de commande O2 représentatif d'un angle de rotation de l'ensemble 36 autour de l'axe de rotation longitudinal A3 de la vis de guidage 30. L'angle de rotation de l'ensemble 36 est défini pour amener le ou les ergots 32 de la noix à ergot 31 face à la ou aux encoches 35 de la noix de liaison 25,
- la mise en marche de l'actionneur M2 en fonction de l'ordre de commande O2 représentatif de l'angle de rotation de l'ensemble 36,
- la rotation de l'ensemble 36 selon l'angle de rotation de l'ensemble 36,
- la transmission du dispositif de commande 19 à l'actionneur M1 d'un ordre de commande O7 représentatif d'un angle de rotation de la vis de guidage 30 autour de l'axe de rotation longitudinal A3 de la vis de guidage 30. L'angle de rotation de la vis de guidage 30 est défini pour entraîner en translation la noix à ergot 31 afin que le ou les ergots se trouvent dans la rainure circulaire interne 27 après avoir passé par la ou aux encoches 35 de la noix de liaison 25,
- la mise en marche de l'actionneur M1 en fonction de l'ordre de commande O7 représentatif de l'angle de rotation de l'ensemble 36,
- la rotation de la vis de guidage 30 selon l'angle de rotation défini dans l'ordre de commande 07,
- la transmission du dispositif de commande 19 à l'actionneur M2 d'un ordre de commande O8 représentatif d'un angle de rotation de l'ensemble 36 autour de l'axe de rotation longitudinal A3 de la vis de guidage 30. L'angle de rotation de l'ensemble 36 est défini pour éloigner angulairement le ou les ergots 32 de la noix à ergot 31 de la ou des encoches 35 de la noix de liaison 25,
- la mise en marche de l'actionneur M2 en fonction de l'ordre de commande O8 représentatif de l'angle de rotation de l'ensemble 36,
- la rotation de l'ensemble 36 selon l'angle de rotation de l'ensemble 36.

Dans cette étape E1, le dispositif de commande peut recevoir le signal électrique S5 du capteur de position C5 lorsque le ou les ergots se trouvent face à la ou aux encoches 35. Quand le dispositif de commande 19 reçoit ce signal électrique S5, le dispositif de commande 19 commande à l'actionneur M2 de stopper la rotation de l'ensemble 36. Le dispositif de commande 19 peut alors transmettre à l'actionneur M1 l'ordre de commande 07. Quand le dispositif de commande 19 reçoit ensuite le signal électrique S4 du capteur de position C4, le dispositif de commande 19 commande à l'actionneur M1 de stopper la rotation de la vis de guidage 30. Le dispositif de commande 19 peut alors transmettre à l'actionneur M2 l'ordre de commande O8. Quand le dispositif de commande 19 reçoit ensuite le signal électrique S6 du capteur de position C6, le dispositif de commande 19 commande à l'actionneur M2 de stopper la rotation de l'ensemble 36. Quand le dispositif de commande 19 reçoit ce signal électrique S6, le dispositif de commande 19 peut mettre en oeuvre l'étape E2 de fermeture.

L'invention concerne également un procédé d'ouverture à distance du vantail 5 à l'aide du système 1 (figure 24).

Le procédé d'ouverture peut être mis en oeuvre quand un utilisateur envoie un ordre de commande d'ouverture du vantail 5 au dispositif de commande 19 à l'aide de l'interface homme-machine 191.

Ledit procédé comprend au moins une étape F2 de déverrouillage en réponse à une réception d'ordre de commande de déverrouillage du dispositif de commande 19 suite à une réception par le dispositif de commande 19 d'ordres de commande transmis à distance par l'utilisateur et une étape F3 d'ouverture en réponse à la réception d'ordre de commande d'ouverture du dispositif de commande 19.

L'étape F2 de déverrouillage peut comprendre :
- la transmission du dispositif de commande 19 à l'actionneur M3 d'un ordre de commande P1 représentatif d'un angle de rotation de mise en place des deux doigts de guidage 38 autour de l'axe de rotation A4 du levier de verrouillage 13 quand le vantail 5 est dans la position fermée. L'angle de rotation de mise en place est défini pour amener les deux doigts de guidage 38 face au levier de verrouillage 13 qui est dans la position de verrouillage,
- la mise en marche de l'actionneur M3 en fonction de l'ordre de commande P1 représentatif de l'angle de rotation de mise en place des deux doigts de guidage 38,
- la rotation des deux doigts de guidage 38 selon l'angle de rotation de mise en place des deux doigts de guidage 38,
- la transmission du dispositif de commande 19 à l'actionneur M4 d'un ordre de commande P2 représentatif d'un angle de rotation d'enserrement des deux doigts de guidage 38 autour d'un axe de rotation A5 perpendiculaire à l'axe de rotation A4 du levier de verrouillage 13 quand le vantail 5 est dans la position fermée. L'angle de rotation d'enserrement est défini pour amener les deux doigts de guidage 38 à enserrer le levier de verrouillage 13,
- la mise en marche de l'actionneur M4 en fonction de l'ordre de commande P2 représentatif de l'angle de rotation d'enserrement des deux doigts de guidage 38,
- la rotation des deux doigts de guidage 38 selon l'angle de rotation d'enserrement des deux doigts de guidage 38,
- la transmission du dispositif de commande 19 à l'actionneur M3 d'un ordre de commande P3 représentatif d'un angle de rotation de déverrouillage des deux doigts de guidage 38 autour de l'axe de rotation A4 du levier de verrouillage 13 quand le vantail 5 est dans la position fermée. L'angle de rotation de déverrouillage est défini pour amener les deux doigts de guidage 38 à faire tourner le levier de verrouillage 13 vers la position de déverrouillage,
- la mise en marche de l'actionneur M3 en fonction de l'ordre de commande P3 représentatif de l'angle de rotation déverrouillage,
- la rotation des deux doigts de guidage 38 selon l'angle de rotation de déverrouillage des deux doigts de guidage 38.

Dans cette étape F2, le dispositif de commande peut recevoir le signal électrique S7 du capteur de position C7 lorsque les deux doigts de guidage 38 enserrent le levier de verrouillage 13. Quand le dispositif de commande 19 reçoit ce signal électrique S7, le dispositif de commande 19 peut commencer à transmettre l'ordre de commande P3. Le dispositif de commande peut alors recevoir le signal électrique S9 du capteur de position C10 lorsque les deux doigts de guidage 38 se trouvent dans la position de déverrouillage. Quand le dispositif de commande 19 reçoit ce signal électrique S10, le dispositif de commande 19 peut passer l'étape F3 d'ouverture.

L'étape F3 d'ouverture est mise en oeuvre par le dispositif de fermeture 15. Elle consiste à ce que le module de fermeture 17 éloigne de lui le module de fermeture 16 de façon à amener le vantail 5 vers la position ouverte.

L'étape F3 d'ouverture peut comprendre :
- la transmission du dispositif de commande 19 à l'actionneur M1 d'un ordre de commande P4 représentatif d'un angle de rotation de la vis de guidage 30 susceptible d'amener le vantail 5 dans la position ouverte,
- la mise en marche de l'actionneur M1 en fonction de l'ordre de commande P4,
- la rotation de la vis de guidage 30 entraînée par l'actionneur M1 selon l'angle de rotation susceptible d'amener le vantail 5 dans la position ouverte,
- la translation de la noix à ergot 31 le long de la vis de guidage 30 entraînée par la rotation de la vis de guidage 30,
- la translation de la noix de liaison 25 le long de la vis de guidage 30 entraînée par la translation de la noix à ergot 31,
- la poussée de la première extrémité 8 du bras d'articulation 7 par la translation de la noix à ergot 31 du module de fermeture 16 jusqu'à ce que le vantail 5 soit dans la position ouverte.

Dans cette étape F3 d'ouverture, le dispositif de commande 19 peut recevoir le signal électrique S2 du capteur de position C2 lorsque la noix à ergot 31 se trouve dans la position d'ouverture le long de la vis de guidage. Quand le dispositif de commande 19 reçoit ce signal électrique S2, le dispositif de commande 19 commande à l'actionneur M1 de stopper la rotation de la vis de guidage 30.

Le dispositif de commande 19 peut également commander à l'actionneur M1 de stopper la rotation de la vis de guidage 30 quand le dispositif de commande 19 reçoit le signal électrique S13 indiquant que le vantail 5 est bloqué par l'élément de blocage 40. Quand le dispositif de commande 19 reçoit le signal électrique S13 (ou le signal électrique S2 dans un autre mode de réalisation), le dispositif de commande 19 peut confirmer à l'utilisateur que le vantail 5 est déverrouillé et ouvert. La confirmation peut être transmise du dispositif de commande 19 à l'interface homme-machine 191 sous forme d'un signal électrique de confirmation d'ouverture. Le procédé peut également comprendre une étape F1 de mise en place de la noix à ergot 31. L'étape F1 de mise en place consiste à emboîter la noix à ergot 31 dans la noix de liaison 25. Cette étape peut précéder les étapes F2 et F4. Cette étape F1 est identique à l'étape E1. Quand le dispositif de commande 19 reçoit ce signal électrique S6, le dispositif de commande 19 peut mettre en oeuvre l'étape F2 de déverrouillage.

Les actionneurs M1, M2, M3, M4 et M5 peuvent être des actionneurs électriques, des actionneurs pneumatiques ou des actionneurs hydrauliques sans sortir du cadre de l'invention.

Pour limiter le nombre de capteurs de position, les capteurs de position C1 à C14 peuvent être remplacés, le cas échéant, par des systèmes de codage (codeur, détecteur analogique avec une rampe, etc.)

En résumé, l'invention concerne un système 1 de fermeture et d'ouverture à distance d'une porte 2 d'aéronef AC. Le système 1 comprend un premier module de fermeture et d'ouverture 16 fixé de façon amovible à une extrémité 8 d'un bras d'articulation 7 de la porte auquel est articulée un vantail 5, et un deuxième module de fermeture et d'ouverture 17 fixé de façon amovible à une structure solidaire 61 d'un dormant 6 de la porte. Le deuxième module de fermeture et d'ouverture 17 est apte, alternativement, à tirer vers lui le premier module de fermeture et d'ouverture 16 pour amener le vantail 5 vers la position fermée et à éloigner de lui le premier module de fermeture et d'ouverture 16 pour amener le vantail 5 vers la position ouverte. Optionnellement, un dispositif de verrouillage et de déverrouillage 18 est fixé de façon amovible au bras d'articulation 7. Le dispositif de verrouillage et de déverrouillage 18 est apte à amener un levier de verrouillage 13 alternativement dans une position déverrouillée pour un déverrouillage du vantail 5 et dans une position verrouillée pour un verrouillage du vantail 5. Le système 1 permet de fermer la porte 2 de l'aéronef AC à distance.

Le système 1 présente plusieurs avantages en plus de ceux décrits ci-avant dans la description :
- le système 1 peut être manipulé par une seule personne, la masse des différents éléments constitutifs étant faible,
- le positionnement de ce système 1 ne nécessite aucune modification de la structure et n'a donc aucun impact sur la certification de l'aéronef AC,
- si nécessaire, il est possible d'actionner le système 1 manuellement, lors d'une opération de maintenance par exemple,
- aucun outil spécifique n'est nécessaire pour monter et démonter le système 1 selon l'invention, le démontage pouvant être effectué dans n'importe quelle position de la porte 2,
- une automatisation de la mise en place du système 1 est possible.

## Revendications

1. Système de fermeture et d'ouverture à distance d'une porte (2) prévue pour une ouverture d'accès (3) d'un fuselage (4) d'un aéronef (AC), la porte (2) comportant un vantail (5), un dormant (6) délimitant l'ouverture d'accès (3) et un bras d'articulation (7), le dormant (6) étant fixé solidairement au fuselage (7), le vantail (5) étant configuré pour se trouver alternativement dans une position fermée quand le vantail (5) obture l'ouverture d'accès (3) et une position ouverte quand le vantail (5) laisse l'ouverture d'accès (3) ouverte, le bras d'articulation (7) comportant une première extrémité (8) articulée au vantail et une deuxième extrémité (9) articulée au dormant de façon que le vantail (5) reste parallèle à lui-même lorsqu'il passe de la position ouverte à la position fermée et vice-versa, la porte (2) comportant en outre un mécanisme de verrouillage (12) configuré pour alternativement verrouiller et déverrouiller le vantail (5) quand le vantail (5) est dans la position fermée, le mécanisme de verrouillage (12) comprenant un levier de verrouillage (13) dont une extrémité (14) est montée rotatif sur le vantail (5) autour d'un axe de rotation perpendiculaire au vantail (5), le levier de verrouillage (13) étant configuré pour se trouver alternativement dans une position de verrouillage dans laquelle le mécanisme de verrouillage (12) verrouille le vantail (5) et une position de déverrouillage dans laquelle le mécanisme de verrouillage (12) ne verrouille pas le vantail (5),
**caractérisé en ce qu'**il comprend :
- un dispositif de fermeture et d'ouverture (15) comportant un premier module de fermeture et d'ouverture (16) destiné à être fixé de façon amovible à la première extrémité (8) du bras d'articulation (7) et un deuxième module de fermeture et d'ouverture (17) destiné à être fixé de façon amovible à une structure solidaire (61) du dormant (6), le deuxième module de fermeture et d'ouverture (17) étant apte, alternativement, à tirer vers lui le premier module de fermeture et d'ouverture (16) de façon à amener le vantail (5) vers la position fermée et à éloigner de lui le premier module de fermeture et d'ouverture (16) de façon à amener le vantail (5) vers la position ouverte,
- un dispositif de verrouillage et déverrouillage (18) destiné à être fixé de façon amovible au bras d'articulation (7), le dispositif de verrouillage et déverrouillage (18) étant configuré pour amener le levier de verrouillage (13) alternativement dans la position déverrouillée pour un déverrouillage du vantail (5) et dans la position verrouillée pour un verrouillage du vantail (5),
- un dispositif de commande (19) configuré pour transmettre des ordres de commande de fermeture ou d'ouverture du vantail (5) au dispositif de fermeture et d'ouverture (15) et des ordres de commande de verrouillage ou de déverrouillage du vantail (5) au dispositif de verrouillage et déverrouillage (18), en fonction d'ordres de commande transmis à distance au dispositif de commande (19) par un utilisateur.

2. Système selon la revendication 1,
**caractérisé en ce que** le deuxième module de fermeture et d'ouverture (17) comprend un système vis-noix comportant :
- une vis de guidage (30) présentant un axe de rotation longitudinal (A3), la vis de guidage (30) étant configurée pour entrer en rotation autour de son axe de rotation longitudinal (A3), et
- une noix à ergot (31) vissée à la vis de guidage (30), la noix à ergot (31) étant configurée pour se déplacer en translation le long de la vis de guidage (30) quand la vis de guidage (30) entre en rotation, la noix à ergot (31) étant assemblée de façon amovible au premier module de fermeture et d'ouverture (16), la translation de la noix à ergot (31) entraînant alternativement :
∘ un rapprochement du premier module de fermeture et d'ouverture (16) vers le deuxième module de fermeture et d'ouverture (17) de façon à amener le vantail (5) vers la position fermée et
∘ un éloignement du premier module de fermeture et d'ouverture (16) du deuxième module de fermeture et d'ouverture (17) de façon à amener le vantail (5) vers la position ouverte.

3. Système selon l'une quelconque des revendications 1 et 2,
**caractérisé en ce qu'**il comprend en outre un dispositif de fixation (20) comportant :
- un premier module de fixation (21) configuré pour être fixé de façon solidaire à la première extrémité (8) du bras d'articulation (7), le premier module de fermeture et d'ouverture (16) étant destiné à être fixé de façon amovible au premier module de fixation (21),
- un deuxième module de fixation (22) configuré pour être fixé de façon solidaire à la structure solidaire (61) du dormant (6), le deuxième module de fermeture et d'ouverture (17) étant destiné à être fixé de façon amovible au deuxième module de fixation (22),
- un troisième module de fixation (23) configuré pour être fixé de façon solidaire au bras d'articulation (7), le dispositif de verrouillage et déverrouillage (18) étant destiné à être fixé de façon amovible au troisième module de fixation (23).

4. Système selon l'une quelconque des revendications 2 à 3,
**caractérisé en ce que** le premier module de fermeture et d'ouverture (16) comporte :
- un support de fixation (24) destiné à être fixé de façon amovible à la première extrémité (8) du bras d'articulation (7),
- une noix de liaison (25) montée rotatif au support de fixation (24) autour d'un axe de rotation (A1), la noix de liaison (25) présentant une bague de guidage (26) présentant un diamètre confondu avec l'axe de rotation (A1) de la noix de liaison (25), la bague de guidage (26) présentant une rainure circulaire interne (27), la noix à ergot (31) présentant au moins un ergot (32) destiné à être assemblé par emboîtement de façon amovible au moins en partie à la rainure circulaire interne (27) de la bague de guidage (26), l'axe de rotation (A1) de la noix de liaison (25) étant destiné à être perpendiculaire à l'axe de rotation longitudinal (A3) de la vis de guidage (30) quand la noix à ergot (31) est assemblée par emboîtement à la rainure circulaire interne (27) de la bague de guidage (26) ;
le deuxième module de fermeture et d'ouverture (17) comportant en outre :
- un support de fixation (28) destiné à être fixé de façon amovible à la structure solidaire (61) du dormant (6),
- un support auxiliaire (29) monté rotatif au support de fixation (28) selon un axe de rotation (A2) vertical, la vis de guidage (30) étant montée rotatif au support auxiliaire (29) autour de son axe de rotation longitudinal (A3),
- un tube de guidage (33) entourant de façon concentrique la vis de guidage (30), le tube de guidage (33) comprenant au moins une fente longitudinale (34), le ou les ergots (32) de la noix à ergot (31) faisant saillie sur le tube de guidage (33) à travers la ou les fentes longitudinales (34), le tube de guidage (33) étant configuré pour s'engager dans la bague de guidage (26) de la noix de liaison (25),
- un premier actionneur (M1) configuré pour entraîner en rotation la vis de guidage (30) autour de son axe de rotation longitudinal (A3), le dispositif de commande (19) étant apte à envoyer au premier actionneur (M1) un ordre de commande (O1) représentatif d'un angle de rotation de la vis de guidage (30) destiné à être mis en oeuvre par le premier actionneur (M1), les ordres de commande de fermeture ou d'ouverture du vantail (5) comprenant l'ordre de commande (O1) représentatif de l'angle de rotation de la vis de guidage (30) ;
la rotation de la vis de guidage (30) entraînant une translation de la noix à ergot (31) bloquée en rotation par le ou les ergots (32) faisant saillie sur le tube de guidage (33) à travers la ou les fentes longitudinales (34), la translation étant parallèle à l'axe de rotation longitudinal (A3) de la vis de guidage (30), la translation de la noix à ergot (31) emboîtée dans la rainure circulaire interne (27) de la bague de guidage (26) entraînant alternativement :
- un éloignement du premier module de fermeture et d'ouverture (16) par rapport du deuxième module de fermeture et d'ouverture (17) et
- un rapprochement du premier module de fermeture et d'ouverture (16) vers le deuxième module de fermeture et d'ouverture (17).

5. Système selon la revendication 4,
**caractérisé en ce que** la noix de liaison (25) comprend au moins une encoche (35) destinée à laisser le passage du ou des ergots (32) de la noix à ergot (31) lorsque le ou les ergots (32) en translation parallèle à l'axe de rotation longitudinal (A3) de la vis de guidage (30) se trouvent face à la ou les encoches (35),
le deuxième module de fermeture et d'ouverture (17) comprenant en outre un deuxième actionneur (M2) configuré pour entraîner en rotation un ensemble (36) comprenant la vis de guidage (30) ainsi que le premier actionneur (M1) et le tube de guidage (33) autour de l'axe de rotation longitudinal (A3) de la vis de guidage (30), le dispositif de commande (19) étant apte à envoyer au deuxième actionneur (M2) un ordre de commande (O2) représentatif d'un angle de rotation dudit ensemble (36) destiné à être mis en oeuvre par le deuxième actionneur (M2), les ordres de commande de fermeture ou d'ouverture du vantail (5) comprenant l'ordre de commande (O2) représentatif de l'angle de rotation de l'ensemble (36), la rotation de l'ensemble (36) permettant alternativement :
- d'amener le ou les ergots (32) face à la ou aux encoches (35) en vue d'un passage du ou des ergots (32) par la ou les encoches (35) en vue d'un emboîtement du ou des ergots (32) dans la rainure circulaire interne (27) de la bague de guidage (26) ou en vue d'une séparation du ou des ergots (32) de la rainure circulaire interne (27) de la bague de guidage (26), ou
- d'éloigner angulairement le ou les ergots (32) de la ou des encoches (35) pour emboîter le ou les ergots (32) dans la rainure circulaire interne (27) de la bague de guidage (26) ou en vue de disjoindre le ou les ergots (32) de la rainure circulaire interne (27) de la bague de guidage (26) après une séparation du ou des ergots (32) de la rainure circulaire interne (27) de la bague de guidage (26).

6. Système selon l'une quelconque des revendications 4 et 5,
caractérisé que le dispositif de fermeture et d'ouverture (15) comporte en outre :
- un premier capteur de position (C1) configuré pour transmettre au dispositif de commande (19) un signal électrique (S1) quand la noix à ergot (31) se trouve dans une position de fermeture le long de la vis de guidage (30), le signal électrique (S1) transmis par le premier capteur de position (C1) étant représentatif d'une position de la noix à ergot (31) quand la noix à ergot (31) se trouve dans la position de fermeture le long de la vis de guidage (30), la position de fermeture le long de la vis de guidage (30) correspondant à une position que la noix à ergot (31) doit présenter pour que le vantail (5) soit dans la position fermée,
- un deuxième capteur de position (C2) configuré pour transmettre au dispositif de commande (19) un signal électrique (S2) quand la noix à ergot (31) se trouve dans une position d'ouverture le long de la vis de guidage (30), le signal électrique (S2) transmis par le deuxième capteur de position (C2) étant représentatif d'une position de la noix à ergot (31) quand la noix à ergot (31) se trouve dans la position d'ouverture le long de la vis de guidage (30), la position d'ouverture le long de la vis de guidage (30) correspondant à une position que la noix à ergot (31) doit présenter pour que le vantail (5) soit dans la position ouverte,
- un troisième capteur de position (C3) configuré pour transmettre au dispositif de commande (19) un signal électrique (S3) quand la noix à ergot (31) se trouve dans une position par défaut le long de la vis de guidage (30), le signal électrique (S3) transmis par le troisième capteur de position (C3) étant représentatif d'une position de la noix à ergot (31) quand la noix à ergot (31) se trouve dans la position par défaut le long de la vis de guidage (30),
- un quatrième capteur de position (C4) configuré pour transmettre au dispositif de commande (19) un signal électrique quand la noix à ergot (31) se trouve dans une position d'emboîtement, le signal électrique transmis par le quatrième capteur de position (C4) étant représentatif d'une position de la noix à ergot (31) quand la noix à ergot (31) se trouve dans la position d'emboîtement, la position d'emboîtement correspondant à une position dans laquelle le ou les ergots (32) de la noix à ergot (31) se trouvent dans la rainure circulaire interne (27) de la bague de guidage (26).

7. Système selon l'une quelconque des revendications 5 et 6,
**caractérisé en ce que** le dispositif de fermeture et d'ouverture (15) comprend en outre :
- un cinquième capteur de position (C5) configuré pour transmettre au dispositif de commande (19) un signal électrique (S5) quand le ou les ergots (32) de la noix à ergot (31) se trouvent face à la ou aux encoches (35), le signal électrique (S5) transmis par le cinquième capteur de position (C5) étant représentatif d'une position angulaire du deuxième actionneur (M2) quand le ou les ergots (32) de la noix à ergot (31) se trouvent face à la ou aux encoches (35),
- un sixième capteur de position (C6) configuré pour transmettre au dispositif de commande (19) un signal électrique (S6) quand le ou les ergots (32) de la noix à ergot (31) ne se trouvent pas face à la ou aux encoches (35), le signal électrique (S6) transmis par le sixième capteur de position (C6) étant représentatif d'une position angulaire du deuxième actionneur (M2) quand le ou les ergots (32) de la noix à ergot (31) ne se trouvent pas face à la ou aux encoches (35).

8. Système selon l'une quelconque des revendications 1 à 7,
**caractérisé en ce que** le dispositif de verrouillage et de déverrouillage (18) comprend :
- un support de fixation (37) destiné à être fixé de façon amovible au bras d'articulation (7),
- deux doigts de guidage (38) entre lesquels le levier de verrouillage (13) est destiné à être enserré, les deux doigts de guidage (38) étant montés rotatif au support de fixation (37),
- un troisième actionneur (M3) configuré pour entraîner en rotation selon un premier angle de rotation les deux doigts de guidage (38) autour de l'axe de rotation (A4) du levier de verrouillage (13) quand le vantail (5) est dans la position fermée, le dispositif de commande (19) étant apte à envoyer au troisième actionneur (M3) un ordre de commande (O3) représentatif du premier angle de rotation des deux doigts de guidage (38) destiné à être mis en oeuvre par le troisième actionneur (M3), les ordres de commande de verrouillage ou de déverrouillage du vantail (5) comprenant l'ordre de commande (O3) représentatif du premier angle de rotation des deux doigts de guidage (38),
- un quatrième actionneur (M4) configuré pour entraîner en rotation selon un deuxième angle de rotation les deux doigts de guidage (38) autour d'un axe de rotation (A5) perpendiculaire à l'axe de rotation (A4) du levier de verrouillage (13) quand le vantail (5) est dans la position fermée, le dispositif de commande (19) étant apte à envoyer au quatrième actionneur (M4) un ordre de commande (O4) représentatif du deuxième angle de rotation des deux doigts de guidage (38) destiné à être mis en oeuvre par le quatrième actionneur (M4), les ordres de commande de verrouillage ou de déverrouillage du vantail (5) comprenant l'ordre de commande (O4) représentatif du deuxième angle de rotation des deux doigts de guidage (38).

9. Système selon l'une quelconque des revendications 1 à 8,
**caractérisé en ce que** le dispositif de verrouillage et de déverrouillage (18) comprend en outre :
- un doigt de déblocage (39) configuré pour désenclencher un élément de blocage (40) destiné à bloquer le vantail (5) dans la position ouverte après une ouverture du vantail (5),
- un cinquième actionneur (M5) configuré pour entraîner en translation le doigt de déblocable (39) de façon à désenclencher l'élément de blocage (40) en amenant le doigt de déblocage (39) dans une position de déblocage, le dispositif de commande (19) étant apte à envoyer au cinquième actionneur (M5) un ordre de commande (O5) représentatif d'une distance de translation du doigt de déblocage (39) destinée à être mis en oeuvre par le cinquième actionneur (M5), les ordres de commande de déverrouillage du vantail (5) comprenant l'ordre de commande (O5) représentatif de la distance de translation du doigt de déblocage (39).

10. Système selon l'une quelconque des revendications 8 et 9,
**caractérisé en ce que** le dispositif de verrouillage et de déverrouillage (18) comprend en outre :
- un septième capteur de position (C7) configuré pour transmettre au dispositif de commande (19) un signal électrique (S7) quand les deux doigts de guidage (38) enserrent le levier de verrouillage (13), le signal électrique (S7) transmis par le septième capteur de position (C7) étant représentatif d'une position des deux doigts de guidage (38) quand ils enserrent le levier de verrouillage (13),
- un huitième capteur de position (C8) configuré pour transmettre au dispositif de commande (19) un signal électrique (S8) quand les deux doigts de guidage (38) n'enserrent pas le levier de verrouillage (13), le signal électrique (S8) transmis par le huitième capteur de position (C8) étant représentatif d'une position des deux doigts de guidage (38) quand ils n'enserrent pas le levier de verrouillage (13),
- un neuvième capteur de position (C9) configuré pour transmettre au dispositif de commande (19) un signal électrique (S9) quand les deux doigts de guidage (38) se trouvent dans une position de verrouillage autour de l'axe de rotation (A4) du levier de verrouillage (13), le signal électrique (S9) transmis par le neuvième capteur de position (C9) étant représentatif d'une position des deux doigts de guidage (38) quand les deux doigts de guidage (38) se trouvent dans la position de verrouillage autour de l'axe de rotation (A4) du levier de verrouillage (13), la position de verrouillage correspondant à une position que les deux doigts de guidage (38) doivent présenter pour que le levier de verrouillage (13) soit dans la position verrouillée,
- un dixième capteur de position (C10) configuré pour transmettre au dispositif de commande (19) un signal électrique (S10) quand les deux doigts de guidage (38) se trouvent dans une position de déverrouillage autour de l'axe de rotation (A4) du levier de verrouillage (13), le signal électrique (S10) transmis par le dixième capteur de position (C10) étant représentatif d'une position des deux doigts de guidage (38) quand les deux doigts de guidage (38) se trouvent dans la position de déverrouillage autour de l'axe de rotation (A4) du levier de verrouillage (13), la position de déverrouillage correspondant à une position que les deux doigts de guidage (38) doivent présenter pour que le levier de verrouillage (13) soit dans la position déverrouillée,
- un onzième capteur de position (C11) configuré pour transmettre au dispositif de commande (19) un signal électrique (S11) quand les deux doigts de guidage (38) se trouvent dans une position par défaut, le signal électrique (S11) transmis par le onzième capteur de position (C11) étant représentatif d'une position des deux doigts de guidage (38) quand les deux doigts de guidage (38) se trouvent dans la position par défaut,
- un douzième capteur de position (C12) configuré pour transmettre au dispositif de commande (19) un signal électrique (S12) quand un escalier d'accès (41) à l'ouverture d'accès (3) est déployé.

11. Système selon l'une quelconque des revendications 9 et 10,
**caractérisé en ce que** le dispositif de verrouillage et de déverrouillage (18) comprend en outre :
- un treizième capteur de position (C13) configuré pour transmettre au dispositif de commande (19) un signal électrique (S13) quand le doigt de déblocage (39) ne se trouve pas dans la position de déblocage, le signal électrique (S13) transmis par le treizième capteur de position (C13) étant représentatif de la position du doigt de déblocage (38),
- un quatorzième capteur de position (C14) configuré pour transmettre au dispositif de commande (19) un signal électrique (S14) quand le doigt de déblocage (39) se trouve dans la position de déblocage, le signal électrique (S14) transmis par le quatorzième capteur de position (C14) étant représentatif de la position de déblocage du doigt de déblocage (39).

12. Procédé de fermeture à distance du vantail (5) à l'aide de la mise en oeuvre du système d'ouverture et de fermeture à distance selon l'une quelconque des revendications 1 à 11,
**caractérisé en ce qu'**il comprend les étapes suivantes :
- une étape (E2) de fermeture, mise en oeuvre par le dispositif de fermeture et d'ouverture (15), consistant à ce que le deuxième module de fermeture et d'ouverture (17) tire vers lui le premier module de fermeture et d'ouverture (16) de façon à amener le vantail (5) vers la position fermée en réponse à une réception d'ordre de commande de fermeture du dispositif de commande (19) suite à une réception par le dispositif de commande (19) d'ordres de commande transmis à distance par un utilisateur ;
- une étape (E3) de verrouillage dans laquelle le dispositif de verrouillage et déverrouillage (18) amène le levier de verrouillage (13) dans la position de verrouillage pour un verrouillage du vantail (5) en réponse à une réception d'ordre de commande de verrouillage du dispositif de commande (19).

13. Procédé selon la revendication 12 dépendante de la revendication 4, **caractérisé en ce que** l'étape (E2) de fermeture comprend :
- la transmission du dispositif de commande (19) au premier actionneur (M1) d'un ordre de commande (O1) représentatif d'un angle de rotation de la vis de guidage (30) susceptible d'amener le vantail (5) dans la position fermée,
- la mise en marche du premier actionneur (M1) en fonction de l'ordre de commande (O1) représentatif de l'angle de rotation de la vis de guidage (30),
- la rotation de la vis de guidage (30) entraînée par le premier actionneur (M1) selon l'angle de rotation susceptible d'amener le vantail (5) dans la position fermée,
- la translation de la noix à ergot (31) entraînée par la rotation de la vis de guidage (30),
- la translation de la noix de liaison (25) entraînée par la translation de la noix à ergot (31),
- la traction de la première extrémité du bras d'articulation (7) par la translation de la noix à ergot (31) du module de fermeture (16) jusqu'à ce que le vantail (5) soit dans la position fermée.

14. Procédé selon l'une quelconque des revendications 12 et 13, la revendication 12 étant dépendante de la revendication 8,
**caractérisé en ce que** l'étape (E3) de verrouillage comprend :
- la transmission du dispositif de commande (19) au troisième actionneur (M3) d'un ordre de commande (O3) représentatif d'un angle de rotation de mise en place des deux doigts de guidage (38) autour de l'axe de rotation (A4) du levier de verrouillage (13) quand le vantail (5) est dans la position fermée, l'angle de rotation de mise en place amenant les deux doigts de guidage (38) face au levier de verrouillage (13),
- la mise en marche du troisième actionneur (M3) en fonction de l'ordre de commande (O3) représentatif de l'angle de rotation de mise en place des deux doigts de guidage (38),
- la rotation des deux doigts de guidage (38) selon l'angle de rotation de mise en place des deux doigts de guidage (38),
- la transmission du dispositif de commande (19) au quatrième actionneur (M4) d'un ordre de commande (O4) représentatif d'un angle de rotation d'enserrement des deux doigts de guidage (38) autour d'un axe de rotation (A5) perpendiculaire à l'axe de rotation (A4) du levier de verrouillage (13) quand le vantail (5) est dans la position fermée, l'angle de rotation d'enserrement amenant les deux doigts de guidage (38) à enserrer le levier de verrouillage (13),
- la mise en marche du quatrième actionneur (M4) en fonction de l'ordre de commande (O4) représentatif de l'angle de rotation d'enserrement des deux doigts de guidage (38),
- la rotation des deux doigts de guidage (38) selon l'angle de rotation d'enserrement des deux doigts de guidage (38),
- la transmission du dispositif de commande (19) au troisième actionneur (M3) d'un ordre de commande (O6) représentatif d'un angle de rotation de verrouillage des deux doigts de guidage (38) autour de l'axe de rotation (A4) du levier de verrouillage (13) quand le vantail (5) est dans la position fermée, l'angle de rotation de verrouillage amenant les deux doigts de guidage (38) à faire tourner le levier de verrouillage (13) vers la position de verrouillage,
- la mise en marche du troisième actionneur (M3) en fonction de l'ordre de commande (O6) représentatif de l'angle de rotation de verrouillage,
- la rotation des deux doigts de guidage (38) selon l'angle de rotation de verrouillage des deux doigts de guidage (38).

15. Aéronef, **caractérisé en ce qu'**il comprend un système d'ouverture et de fermeture à distance (1) selon l'une quelconque des revendications 1 à 11.
